Europäisches Patentamt

European Patent Office

Office européen des brevets

(19)

(11) EP 0 570 671 B1

(12) **EUROPÄISCHE PATENTSCHRIFT**

(45) Veröffentlichungstag und Bekanntmachung des Hinweises auf die Patenterteilung:
**29.12.1997 Patentblatt 1997/52**

(51) Int Cl.⁶: **G01L 5/16**

(21) Anmeldenummer: **93103055.5**

(22) Anmeldetag: **26.02.1993**

(54) **Messrad mit mehreren kombinierten Radial-/Tangentialverbindungen**

Measuring wheel with several combined radial-tangential-connections

Roue de mesure avec plusieurs connections radiale- tangentielle combinées

(84) Benannte Vertragsstaaten:
**AT DE ES FR GB IT SE**

(30) Priorität: **20.05.1992 DE 4216670**

(43) Veröffentlichungstag der Anmeldung:
**24.11.1993 Patentblatt 1993/47**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
• **Rupp, Andreas, Dipl.-Ing.
W-6100 Darmstadt (DE)**
• **Grubisic, Vatroslav, Prof. Dr. Ing.
W-6107 Reinheim (DE)**
• **Neugebauer, Jürgen, Dr. Ing.
Rochester Hills, MI 48309 (US)**

(74) Vertreter: **Kraus, Walter, Dr. et al
Patentanwälte Kraus, Weisert & Partner
Thomas-Wimmer-Ring 15
80539 München (DE)**

(56) Entgegenhaltungen:
**EP-A- 0 352 788**

• **INGENIEUR Bd. 76, Nr. 28, 10. Juli 1964, DEN HAAG NL Seiten 81 - 89 H.C.A. VAN ELDIK THIEME 'DE AUTOBAND. CONSTRUCTIE EN BEPROEVING'**

**Beschreibung**

Die Erfindung betrifft ein Meßrad mit einer Nabe und einer Felge, sowie mit wenigstens einer Verbindungsanordnung zwischen Nabe und Felge, und mit einem oder mehreren Meßelementen in oder an der Verbindungsanordnung zum Messen von Kräften und/oder Momenten, die am rotierenden Meßrad wirksam sind.

Für die Konstruktion und Bemessung von Personen- und Nutzkraftfahrzeugen ist es von großer Wichtigkeit, die im praktischen Betrieb eines Personen- oder Nutzkraftfahrzeugs auftretenden Kräfte und Momente, welche über die Fahrzeugräder auf das Personen- oder Nutzkraftfahrzeug einwirken, zu messen. Die Ermittlung dieser Kräfte und Momente geschieht u.a. mittels sogenannter Meßräder, die entweder an Versuchs fahrzeugen anmontiert sind, so daß sie den verschiedensten in der Praxis auftretenden Belastungen ausgesetzt werden, oder die auf Versuchsständen an Fahrzeugen oder Fahrzeugkomponenten anmontiert und programmierten Belastungen, die praktische Bedingungen simulieren sollen, unterworfen werden.

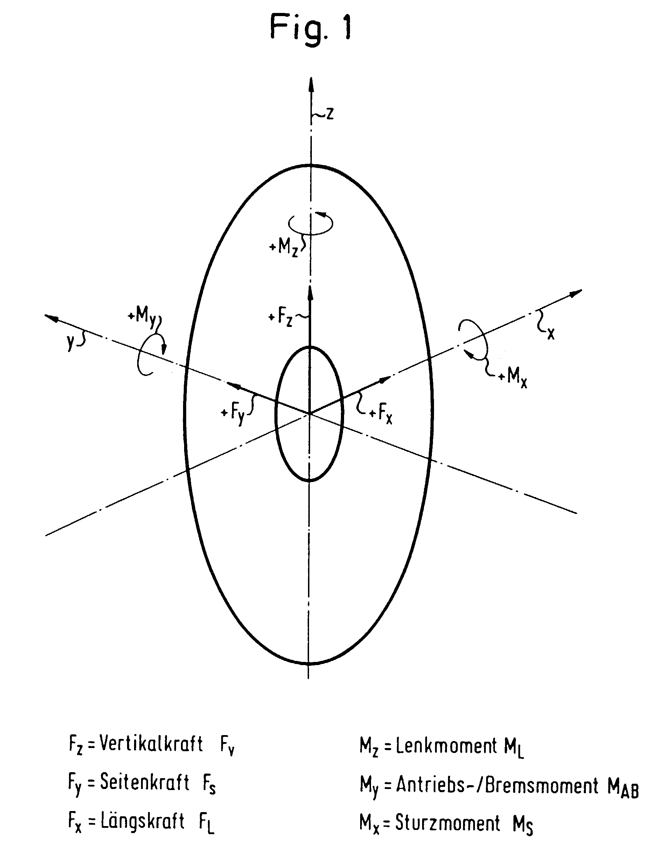

Bevor auf die Problematik derartiger Meßräder näher eingegangen wird, seien zunächst unter Bezugnahme auf die Figur 1 die zu messenden Kräfte und Momente erläutert:

In Figur 1 ist symbolisch-perspektivisch ein Fahrzeugrad mit Felge durch zwei konzentrische Ellipsen angedeutet, und zwar mit einem x-y-z-Koordinatensystem, welches zu Definition der auftretenden Kräfte und Momente derart positioniert ist, daß die y-Koordinatenachse mit der Fahrzeugraddrehachse zusammenfällt, während die x-Koordinatenachse und die z-Koordinatenachse radial bezüglich des Fahrzeugrads verlaufen, und zwar verläuft erstere horizontal und letztere vertikal. Die x-Koordinatenachse wird in der Kraftfahrzeugtechnik auch als Längsachse bezeichnet, während die y-Koordinatenachse auch als Querachse und die z-Koordinatenachse auch als Hochachse bezeichnet werden. Die auftretenden und interessierenden Kräfte und Momente sind

(a) die in Richtung der Hochachse z wirkende Kraft $F_Z$, die auch als Vertikalkraft $F_V$ bezeichnet wird,

(b) die in Richtung der Querachse y wirkende Kraft $F_Y$, die auch als Seitenkraft $F_S$ bezeichnet wird, und

(c) die in Richtung der Längsachse x wirkende Kraft $F_X$, die auch als Längskraft $F_L$ bezeichnet wird, sowie

(d) das um die Hochachse z wirkende Moment $M_Z$, das auch als Lenkmoment $M_L$ bezeichnet wird,

(e) das um die Querachse y wirkende Moment $M_Y$, das auch als Antriebs-/Bremsmoment $M_{AB}$ bezeichnet wird, und

(f) das um die Längsachse x wirkende Moment $M_X$, das auch als Sturzmoment $M_S$ bezeichnet wird.

Die für die vorliegenden Ausführungen per definitionem festgelegten jeweiligen positiven Richtungen der Vertikalkraft $F_Z$, der Seitenkraft $F_Y$ und der Längskraft $F_X$ sowie der ebenfalls per definitionem festgelegte jeweilige positive Sinn des Lenkmoments $M_Z$, des Antriebs-/Bremsmoments $M_Y$ und des Sturzmoments $M_X$ sind in Figur 1 angegeben.

Obwohl die schematische Darstellung der Figur 1 den Eindruck erweckt, als sei es verhältnismäßig einfach, die angegebenen Kräfte und Momente zu messen, hat es sich in der jahrzehntelangen Praxis tatsächlich als schwierig und kompliziert erwiesen, diese Kräfte und Momente im feststehenden Fahrzeugkoordinatensystem mittels rotierenden Meßrädern zu ermitteln.

Zwar ist es auf die verschiedenste Art und Weise möglich, Kräfte und Momente zu messen, die an einem Fahrzeugrad im Betrieb auftreten, indem man ein solches Fahrzeugrad durch Einbau entsprechender Meßelemente zu einem Meßrad umgestaltet. Jedoch ergeben sich in mehrfacher Hinsicht Probleme, aus den Meßwerten, die mit Meßrädern der bisher bekannten Art erhalten werden, brauchbare und zuverlässige Angaben über die tatsächlich in der Praxis am Fahrzeug auftretende Vertikal-, Seiten- und Längskraft sowie über das aktuell in der Praxis wirkende Lenk-, Sturz- und Antriebs-/Bremsmoment zu erhalten, und zwar insbesondere aus folgenden Gründen:

(1) Da in den bekannten Meßrädern mit den einzelnen Meßelementen die zu erfassenden Vertikal-, Seiten- und Längskräfte sowie die zu ermittelnden Lenk-, Sturz- und Antriebs-/Bremsmomente nicht gesondert durch jeweilige Meßelemente erfaßt werden, sondern die Meßsignale der einzelnen Meßelemente von unterschiedlichen Kraftanteilen herrühren, ist es erforderlich, die einzelnen Kraftanteile aus den Meßsignalen zu ermitteln.

Diese "Entkopplung" der einzelnen, von den unterschiedlichen Kraftanteilen herrührenden Meßsignale, sowie die erforderliche Transformation von einem rotierenden Radkoordinatensystem in ein feststehendes Fahrzeugkoordinatensystem muß von einem Rechner durchgeführt werden, der ein spezielles, aufwendiges und teures Meßdatenverarbeitungsprogramm hierzu benötigt.

Zwar versucht man bei gewissen Meßrädern, wie beispielsweise bei dem in DE-GM 82 10 190 beschriebenen Meßrad, bei denen die Kräfte über Dehnungsmeßstreifen gemessen werden, die auf Speichen appliziert sind, welche Nabe und Felge verbinden, die einzelnen Kraftkomponenten durch spezielles Verschalten der Dehnungsmeßstreifen voneinander zu trennen. Das erübrigt aber keinesfalls erhebliche rechentechnische Aufwendungen, da eine komplexe Kalibriermatrix, welche die Empfindlichkeiten sowie das Übersprechverhalten des Meßrades in Abhängigkeit von der Winkelstellung beschreibt, zu jedem Zeitpunkt verarbeitet und in ein raumfestes Koordinatensystem transformiert werden muß.

(2) Eine weitere Schwierigkeit besteht darin, daß bei Fahrbetriebsmessungen die Verformung des Reifens einen großen Einfluß auf das Meßergebnis bei bekannten Meßrädern hat. Denn durch die Verschiebung des resultierenden Kraftangriffspunkts am Reifen wird ständig die Reaktion der einzelnen Meßelemente verändert. Besonders gravierend wird dieses Problem, wenn man Messungen mit völlig gleicher senkrechter und seitlicher Kraft, jedoch mit unterschiedlichen Reifenluftdrücken in Betracht zieht.

(3) Schließlich haben die bekannten Meßräder im allgemeinen ein Gewicht, das weit über dem entsprechenden Gewicht derjenigen Räder liegt, die tatsächlich in der Praxis eingesetzt werden. Ein solches wesentlich höheres Gewicht wirkt sich im Betrieb an einem drehenden Rad nachteilig auf die Genauigkeit aus, da das Schwingungsverhalten des Fahrwerks durch eine solche Erhöhung der ungefederten Masse deutlich verändert wird.

Insbesondere ist aus der DE 3 213 319 A1 und der JP-A-52-133 270 (Int. Klasse GO1L 5/16) ein Meßrad der eingangs genannten Art bekannt. In diesem Meßrad werden die Kräfte über derart kombinierte Axial-Radial-Tangential-Verbindungsanordnungen zwischen Nabe und Felge übertragen, daß alle übertragenen Kräfte immer durch den Meßquerschnitt des jeweiligen Radialverbindungselements jeder der kombinierten Axial-Radial-Tangential-Verbindungsanordnungen hindurchwirken, auf dem auch die Meßelemente (Dehnungsmeßstreifen) angebracht sind, um die verschiedenen übertragenen Kräfte damit zu messen. Dadurch ergeben sich nicht nur komplizierte Meßverhältnisse, sondern die Anpassung muß an die größte zu übertragende Kraft erfolgen, wo mehrere Kraftflußpfade in dem jeweiligen Verbindungselement verlaufen, wodurch sich für die kleineren Kräfte in einem Kraftflußpfad eine schlechte Meßempfindlichkeit ergibt.

Bei diesem bekannten Meßrad werden durch die kombinierten Axial-Radial-Tangential-Verbindungsanordnungen Nabe und Felge biegeweich verbunden, was zur Folge hat, daß die Meßergebnisse durch die unvermeidlichen Naben- und Felgenverformungen beeinflußt werden und dadurch relativ ungenau sind. Insbesondere ergeben sich Fehler der ermittelten Vertikal- und Längskräfte dadurch, daß diese Kräfte aus den radial gemessenen Dehnungen errechnet werden, ein Teil dieser Kräfte aber auch durch die Tangentialanordnung abfließt - in Abhängigkeit der Steifigkeitsverhältnisse von Felge und Verbindungsanordnungen.

Weiter werden bei diesem Meßrad nach der DE 3 213 319 A1 und der JP-A-52-133 270 nur Biegemomente gemessen, was bedeutet, daß das System sogar relativ "weich", das heißt elastisch nachgiebig, sein muß, wenn eine hinreichende Meßempfindlichkeit erzielt werden soll. Durch diese Weichheit kommt es nicht nur zu den vorstehend erwähnten relativ ungenauen Meßergebnissen, sondern er ergeben sich außerdem niedrige Eigenfrequenzen der Nabe, wodurch der dynamische Meßbereich stark eingeschränkt wird.

Außerdem ergibt sich bei dem Meßrad nach der DE 3 213 319 A1 durch die dort vorgesehenen geschwächten radial äußeren Enden der Radialverbindungen in Verbindung mit den daran anschließenden Tangentialverbindungen (Sehnenglieder) eine Torsionsweichheit bezüglich des Antriebs- oder Bremsmoments, die eine vernünftige Messung derselben nicht zuläßt.

Darüber hinaus erfolgt die Messung bei dem Meßrad nach der DE 3 213 319 A1 nur am stehenden Rad, während das Meßrad nach der JP-A-52-133 270, wenn es an einem Fahrzeug angebracht werden soll, erhebliche bauliche Modifizierungen am Fahrzeug erfordert.

Aus der DE 38 25 700 A1 (EP-A2-352 788) ist weiter ein Meßrad der eingangs genannten Art bekannt, bei dem die Verbindungsanordnung zwischen Nabe und Felge folgendes umfaßt:

(a) eine die Nabe in den Radaxialrichtungen sowie um die Hochachse und Längsachse des Meßrads steif, dagegen in den Radial- und Umfangsrichtungen weich mit der Felge verbindende Axialverbindungsanordnung;

(b) eine die Nabe in den Radialrichtungen des Meßrads steif, dagegen in den übrigen Richtungen weich mit der Felge verbindende Radialverbindungsanordnung; und

(c) eine die Nabe in den Umfangsrichtungen um die Raddrehachse herum sowie gegebenenfalls in Radialrichtung (en) steif, dagegen in den übrigen Richtungen weich mit der Felge verbindende Tangentialverbindungsanordnung.

Hierbei ist wenigstens ein Meßelement in oder an wenigstens einer der Verbindungsanordnungen zum Messen derjenigen Kraft oder desjenigen Moments vorgesehen, die bzw. das in einer solchen Richtung zwischen der Nabe und Felge übertragen wird, in welcher letztere durch die jeweilige Verbindungsanordnung steif miteinander verbunden sind, wobei die Radialverbindungsanordnung und/oder die Axialverbindungsanordnung und/oder die Tangentialverbindungsanordnung kraftflußmäßig unabhängig voneinander zwischen Nabe und Felge angebracht sein sollte und jeweils getrennte Kraftflußpfade für die radialen und/oder die axialen und/oder die tangentialen Kräfte zwischen Nabe und Felge gebildet werden sollten.

Obwohl so aufgrund der erstrebten getrennten Kraftflußpfade getrennte Meßpfade erhalten werden, so daß für jede Kraftrichtung eigene Kraftmeßelemente vorgesehen sein können, die unabhängig voneinander messen sollen, ergeben sich Schwierigkeiten, die auf diese Weise mit der Radialverbindungsanordnung und mit der Tangentialverbindungsanordnung gemessenen Kräfte bzw. Momente vom rotierenden Meßradkoordinatensystem auf das ortsfeste Fahrzeugkoordinatensystem umzurechnen. Die zu ermittelnde Vertikal- bzw. Längskraft im feststehenden Fahrzeugkoordinatensystem wirken am Rad in Richtung der rotierenden Radialelemente, aus deren Meßwerten sie errechnet werden sollen, aber ebenso in Richtung der rotierenden Tangentialelemente (unter 90°), die aber getrennte Kraftflußpfade darstellen sollen. In Abhängigkeit der Steifigkeitsverhältnisse von Felge, Radial- und Tangentialverbindungsanordnung ergeben sich damit Fehler bei der Umrechnung in ortsfeste Koordinatensysteme in Abhängigkeit von der momentanen Winkelposition des Rades (der Meßelemente) zum Radaufstandspunkt.

Endlich ist aus der DE 3 342 817 C2 eine Meßnabe bekannt, bei der übertragene Kräfte durch relativ kleine Stege, die Schubkräfte messen, ermittelt werden, wobei über die Stege jeweils nur ein Bruchteil der gesamten übertragenen Kraft gemessen wird, was ein völlig anderes Meßprinzip ist, als es der vorliegenden Erfindung zugrundeliegt.

Aufgabe der Erfindung ist es demgegenüber insbesondere, ein Meßrad der eingangs genannten Art so auszubilden, daß damit außer den Axialkräften auch die Radialkräfte und die Tangentialkräfte sowie die entsprechenden Momente mit hoher Genauigkeit so gemessen werden können, daß eine Umrechnung derselben von dem rotierenden Meßradsystem auf das feststehende Fahrzeugkoordinatensystem mit verhältnismäßig beschränktem Rechenaufwand möglich ist. Insbesondere soll die Umrechnung für die in Bezug auf das Rad gerichteten Längs- ($F_X$) und Vertikalkräfte ($F_Z$) und das rotationssymmetrische Brems- bzw. Antriebsmoment ($M_Y$) möglich werden.

Diese Aufgabe wird gelöst durch ein Meßrad mit einer Nabe und einer Felge, sowie mit wenigstens einer Verbindungsanordnung zwischen Nabe und Felge, und mit einem oder mehreren Meßelementen in oder an der Verbindungsanordnung zum Messen von Kräften und/oder Momenten, die am rotierenden Meßrad wirksam sind, wobei die Verbindungsanordnung zwischen Nabe und Felge folgendes umfaßt:

(a) eine die Nabe in den Radaxialrichtungen sowie um die Hochachse und Längsachse des Meßrads steif, dagegen in den Radial- und Umfangsrichtungen weich mit der Felge verbindende Axialverbindungsanordnung; und

(b) eine die Nabe in den Radial- und Tangentialrichtungen des Meßrads steif, dagegen in der Axialrichtung weich mit der Felge verbindende Radial-/Tangentialverbindungsanordnung;

wobei wenigstens ein Meßelement in oder an wenigstens einer der Verbindungsanordnungen zum Messen derjenigen Kraft oder desjenigen Moments vorgesehen ist, die bzw. das in einer solchen Richtung zwischen der Nabe und der Felge übertragen wird, in welcher letztere durch die jeweilige Verbindungsanordnung steif miteinander verbunden sind; wobei die Radial-/Tangentialverbindungsanordnung

(1) aus einzelnen kombinierten Radial-/Tangentialverbindungen besteht, von denen jede die Nabe in der Radial- und Tangentialrichtung steif, dagegen in der Axialrichtung weich mit der Felge verbindet, und

(2) in ihren Steifigkeiten in den beiden Meßrichtungen und in der Anordnung und Verschaltung der Meßelemente so ausgeführt ist, daß die in bezug auf das Meßrad rotierenden Kraftrichtungen von dem rotationssymmetrischen Moment getrennt werden.

Dieses Meßrad unterscheidet sich von dem Meßrad nach der DE 38 25 700 A1 (EP-A2-352 780) insbesondere durch die vorgenannten kombinierten Radial-/Tangentialverbindungen, von denen jede einzelne die Nabe in den Radial- und Tangentialrichtungen des Meßrads steif mit der Felge verbindet, und in der Axialrichtung eine weiche Verbindung zwischen Nabe und Felge ist.

Auf diese Weise ermöglicht es die Erfindung, außer den Axialkräften die Radialkräfte und die durch die Tangentialkräfte bewirkten Momente mit hoher Genauigkeit bei verhältnismäßig unkomplizierter Umrechnung auf das feststehende Fahrzeugsystem zu messen, indem der Kraftfluß in Radial- und Tangentialrichtung, der in Bezug auf die Vertikal- und Längskräfte nicht zu trennen ist, infolge der kombinierten Radial-/Tangentialverbindungen durch eine gemeinsame Verbindungsanordnung geführt wird, die aber in ihren Steifigkeiten in den beiden Meßrichtungen und durch die Anordnung und Verschaltung der Meßaufnehmer so ausgeführt ist, daß die in Bezug auf das Rad rotierenden Kraftrichtungen (Längsrichtung $F_X$, Vertikalrichtung $F_Z$) von dem rotationssymmetrischen Moment (My, gemessen durch die Tangentialaufnehmer) getrennt werden.

Insbesondere kann das erfindungsgemäße Meßrad so ausgebildet sein, daß die Steifigkeit der Radial-/Tangentialverbindungsanordnung in Tangentialrichtung geringer als in Radialrichtung ist.

Die Axialverbindungsanordnung und die Radial-/Tangentialverbindungsanordnung ist vorzugsweise je eine Lenkerplattenverbindungsanordnung.

Eine bevorzugte Ausführungsform der Erfindung zeichnet sich dadurch aus, daß die Radial-/Tangentialverbindungsanordnung aus wenigstens drei Radial-/Tangentialverbindungen besteht, die vorzugsweise gleichmäßig über den Umfang der Nabe bzw. Felge verteilt angeordnet sind. Besonders bevorzugt besteht die Radial-/Tangentialverbindungsanordnung aus vier Radial-/Tangentialverbindungen, die gleichmäßig über dem Umfang der Nabe bzw. Felge verteilt angeordnet sind. Jede dieser Radial-/Tangentialverbindungen ist bevorzugt eine Lenkerplattenverbindung, wobei die Lenkerplatten vorzugsweise Lenkerbleche sind.

Eine besonders vorteilhafte Ausgestaltung der Erfindung zeichnet sich dadurch aus, daß die als Radial-/Tangentialverbindungen vorgesehenen Lenkerplattenverbindungen je eine erste Lenkerplatte und je zwei weitere Lenkerplatten umfassen, wobei die Plattenebenen der beiden weiteren Lenkerplatten parallel zueinander und senkrecht zur Plattenebene der ersten Lenkerplatte verlaufen, und wobei das eine Ende der ersten Lenkerplatte fest mit den einen Enden der weiteren Lenkerplatten verbunden ist, während das andere Ende der ersten Lenkerplatte fest mit der Felge verbunden ist und die anderen Enden der weiteren Lenkerplatten fest mit der Nabe verbunden sind.

Vorzugsweise ist die Ausbildung dieser Lenkerplattenverbindungen, die als Radial-/Tangentialverbindungen vorgesehen sind, so, daß die Plattenebene der ersten Lenkerplatte in einer senkrecht zur Axialrichtung verlaufenden Radialebene angeordnet ist und daß die Plattenebenen der beiden weiteren Lenkerplatten beidseitig von der ersten Lenkerplatte und parallel zu einer gemeinsamen Radiallinie angeordnet sind. Besonders bevorzugt sind hierbei die beiden weiteren Lenkerplatten parallel zu einer durch die radiale Mitte der ersten Lenkerplatte hindurchgehenden gemeinsamen Radiallinie sowie in gleichen Abständen von dieser Radiallinie angeordnet.

Die weitere bauliche Ausgestaltung dieser als Radial-/Tangentialverbindungen vorgesehenen Lenkerplattenanordnungen oder -verbindungen kann derart sein, daß das eine Ende der ersten Lenkerplatte durch wenigstens ein Verbindungsstück mit den einen Enden der beiden weiteren Lenkerplatten verbunden ist, wobei sich das Verbindungsstück von einer Befestigungsstelle an dem einen Ende der ersten Lenkerplatte in Richtung nach dem anderen Ende der ersten Lenkerplatte zu Befestigungsstellen an den einen Enden der beiden weiteren Lenkerplatten erstreckt.

Zum Messen der Kräfte und Momente mittels der Radial-/Tangentialverbindungen sind deren weitere Lenkerplatten mit Meßaufnehmern, vorzugsweise mit Dehnungsmeßstreifen, versehen, so daß auf diese Weise jeweils ein Meßelement in Radial-/Tangentialrichtung von den beiden weiteren Lenkerplatten einer Radial-/Tangentialverbindung und von einem oder mehreren Meßaufnehmern, insbesondere Dehnungsmeßstreifen, die auf den beiden weiteren Lenkerplatten appliziert sind, gebildet ist. Hierbei sind auf den beiden weiteren Lenkerplatten bevorzugt mehrere erste Meßaufnehmer bzw. Dehnungsmeßstreifen derart appliziert und zu Halb- oder Vollbrücken verschaltet, daß nur die Zuganteile gemessen und die Biegeanteile herauskompensiert werden. Vorzugsweise gleichzeitig sind auf denselben beiden weiteren Lenkerplatten mehrere zweite Meßaufnehmer bzw. Dehnungsmeßstreifen derart appliziert und zu Halb- oder Vollbrücken verschaltet, daß nur die Biegeanteile gemessen und die Zuganteile herauskompensiert werden.

Die gesamte Meßanordnung für die Radial-/Tangentialrichtungen besteht vorzugsweise aus drei oder vier solchen Meßelementen, die in gleichen Umfangswinkelabständen voneinander um die Nabe herum angeordnet sind.

Die Axialverbindungsanordnung ist bevorzugt so ausgebildet, wie in der DE 38 25 700 A1 (EP 0 352 788 A2) im einzelnen beschrieben ist, so daß der Inhalt dieser Druckschriften durch diese Bezugnahme mit zum Offenbarungsinhalt der vorliegenden Beschreibung gemacht wird.

Im einzelnen kann die Axialverbindungsanordnung aus wenigstens drei Axialverbindungen bestehen, die vorzugsweise gleichmäßig über den Umfang der Nabe bzw. Felge verteilt angeordnet sind. Jede dieser Axialverbindungen ist bevorzugt eine Lenkerplattenverbindung, wobei die Lenkerplatten vorzugsweise Lenkerbleche sind.

Die als Axialverbindungen vorgesehenen Lenkerplattenverbindungen können bevorzugt je eine erste und zweite Lenkerplatte umfassen, deren Plattenebenen senkrecht zueinander verlaufen, wobei das eine Ende der einen Lenkerplatte fest mit dem einen Ende der anderen Lenkerplatte verbunden ist, während das andere Ende der einen Lenkerplatte fest mit der Nabe und das andere Ende der anderen Lenkerplatte fest mit der Felge verbunden ist.

Die beiden Lenkerplatten können von der Verbindungsstelle ihrer einen Enden aus in der gleichen Axialrichtung verlaufen. Entsprechendes gilt bei einer Radial-/Tangentialverbindung für die erste Lenkerplatte einerseits und die beiden weiteren Lenkerplatten andererseits.

Vorzugsweise sind bei solchen als Axialverbindungen vorgesehenen Lenkerplattenanordnungen oder -verbindungen die beiden Lenkerplatten einer Lenkerplattenverbindung so miteinander verbunden, daß sie über einen wesentlichen Bereich, bevorzugt über mehr als die Hälfte, ihrer Erstrekkung zwischen ihren beiden Enden nebeneinander verlaufen, wobei eine der beiden Lenkerplatten ganz oder teilweise in zwei parallele Streifen aufgeteilt sein kann. Auch hier gilt Entsprechendes für die Radial-/Tangentialverbindungen, wobei die erste Lenkerplatte bevorzugt so mit den beiden weiteren Lenkerplatten verbunden ist, daß alle diese Lenkerplatten weitgehend nebeneinander verlaufen, so daß sich ein äußerst "zusammengedrängter" Aufbau ergibt, der relativ sehr wenig Raum beansprucht.

Hierbei ist die Ausbildung der jeweiligen Axialverbindung bevorzugt so, daß die einen Enden der beiden Lenkerplatten durch wenigstens ein Verbindungsstück miteinander verbunden sind, das sich von einer Befestigungsstelle an dem einen Ende der einen Lenkerplatte in Richtung nach dem anderen Ende der einen Lenkerplatte zu einer Befestigungsstelle an dem einen Ende der anderen Lenkerplatte erstreckt.

Zum Messen der Axialkräfte ist bevorzugt wenigstens eine der beiden Lenkerplatten einer Axialverbindung mit einem oder mehreren Meßaufnehmern, insbesondere Dehnungsmeßstreifen, versehen, so daß auf diese Weise jeweils ein Meßelement in Axialrichtung gebildet ist. Hierbei sind vorzugsweise in jeder Axialverbindung auf einer oder beiden Lenkerplatten mehrere Meßaufnehmer bzw. Dehnungsmeßstreifen derart appliziert und zu Halb- oder Vollbrücken verschaltet, daß nur die Zuganteile gemessen und die Biegeanteile herauskompensiert werden.

Die gesamte Meßanordnung für die Axialrichtung besteht bevorzugt aus drei oder vier solchen Meßelementen, die in gleichen Umfangswinkelabständen voneinander um die Nabe herum angeordnet sind.

Die gesamte Meßanordnung für die Axialrichtung und die Radial-/Tangentialrichtung ist vorzugsweise so ausgebildet, daß jede Radial-/Tangentialverbindung zusammen mit einer Axialverbindung in einer beiden gemeinsamen, die Radachse enthaltenen Radialebene angeordnet ist, oder daß die Axialverbindungen um die Hälfte des Winkelabstands zwischen den Axialverbindungen gegenüber letzteren versetzt angeordnet sind, sofern die Anzahl der Axialverbindungen gleich derjenigen der Radial-/Tangentialverbindungen ist. Wenn daher, wie es bevorzugt wird, je vier Axialverbindungen und je vier Radial-/Tangentialverbindungen in gleichmäßigen Winkelabständen um die Nabe herum angeordnet sind, dann bedeutet das, daß entweder alle 90° gleichzeitig eine Axial- und eine Radial-/Tangentialverbindung vorgesehen ist, oder daß alle 45° abwechselnd eine Axialverbindung und eine Radial-/Tangentialverbindung um die Nabe herum positioniert ist.

Bevorzugt greifen die Axialverbindungen an einem ersten Nabenvorsprungsteil in dem einen axialen Endbereich eines Nabenteils an, während die Radial-/Tangentialverbindungen an einem zweiten Nabenvorsprungsteil in dem entgegengesetzten axialen Endbereich dieses Nabenteils angreifen. Hierzu ist vorzugsweise das erste Nabenvorsprungsteil als erster Nabenstern ausgebildet, an dessen Sternarmen die Axialverbindungen angreifen, und das zweite Nabenvorsprungsteil ist bevorzugt als zweiter Nabenstern ausgebildet, an dessen Sternarmen die Radial-/Tangentialverbindungen angreifen.

Weiter ist zur Befestigung der felgenseitigen Enden der Axialverbindungen und/oder der Radial-/Tangentialverbindungen vorzugsweise ein an der Stirnfläche der Felge angebrachter Felgenring vorgesehen.

Die Lenkerplatten, die bevorzugt sogenannte Lenkerbleche sind, sind vorzugsweise integral, insbesondere einstückig, mit einem Verbindungsstück ausgebildet, mittels dessen sie durch Schrauben befestigt werden können, wobei dieses Verbindungsstück entweder zum Befestigen von zwei Lenkerplatten aneinander dient, oder als Anschlußteil zum Befestigen der Lenkerplatte an der Nabe oder Felge.

Schließlich ist das erfindungsgemäße Meßrad vorzugsweise mit einem Sinus- und Cosinusgeber versehen, der, wie weiter unten näher erläutert ist, eine besonders günstige Ermittlung der Kräfte und Momente ermöglicht.

Die Erfindung sei nachstehend anhand einiger, besonders bevorzugter Ausführungsformen unter Bezugnahme auf die Figuren 1 bis 6 der Zeichnung näher erläutert; es zeigen:

Figur 1    eine schematische Darstellung der am Fahrzeugrad auftretenden grundsätzlichen Kräfte und Momente;

Figur 2    eine perspektivische Darstellung des prinzipiellen Aufbaus einer besonders bevorzugten Ausführungsform eines Meßrads nach der Erfindung;

Figur 3    einen Teilradialschnitt durch eine bauliche Ausführungsform eines erfindungsgemäßen Meßrads, in welcher die Nabe gemäß Figur 2 mittels vier Axialverbindungen und vier Radial-/Tangentialverbindungen mit der Felge verbunden ist, wobei in Figur 3 nur je eine Radial-/Tangentialverbindung und Axialverbindung gezeigt ist;

Figur 4    einen Schnitt längs der Linie I-I der Figur 3, gesehen in Richtung der dort an der Schnittlinie eingezeichneten Pfeile;

Figur 5    einen Schnitt längs der Linie II-II der Figur 3, gesehen in Richtung der an dieser Schnittlinie eingezeichneten Pfeile; und

Figur 6    eine Aufsicht gemäß dem Pfeil III auf die in Figur 3 und 5 gezeigte und eine weitere, in diesen Figuren nicht sichtbare Axialverbindung.

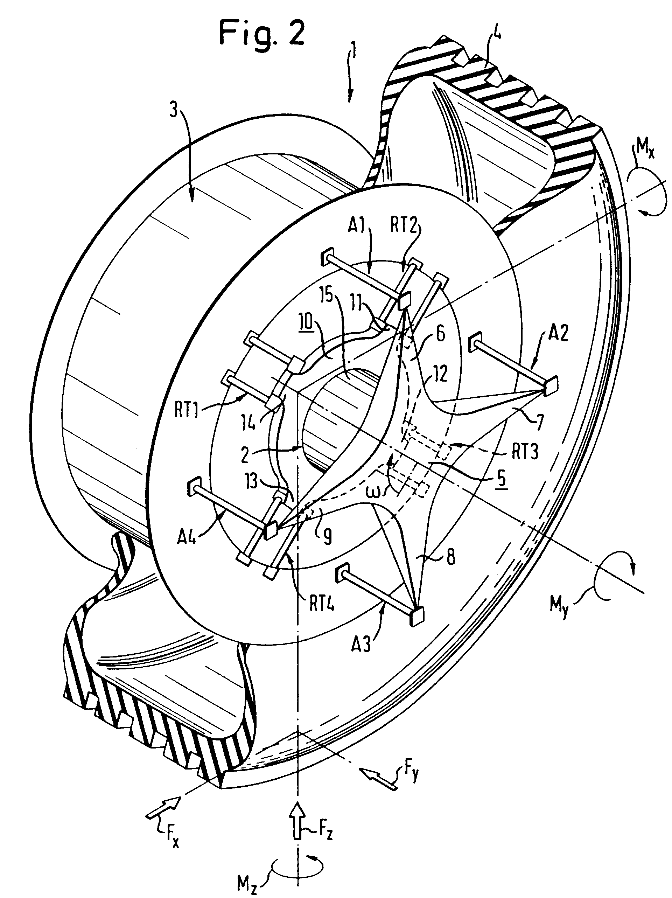

Nachdem die Figur 1 eingangs schon erläutert worden ist, sei nun als nächstes auf Figur 2 Bezug genommen, die schematisch eine bevorzugte Ausführungsform eines Meßrads nach der Erfindung in perspektivischer Ansicht zeigt:

Das Meßrad 1 umfaßt eine Nabe 2 und eine Felge 3, auf welcher ein Reifen 4 aufgezogen ist, von dem aus Darstellungsgründen ein Teil weggeschnitten ist.

Die Nabe 2 besitzt in der dargestellten Ausführungsform einen ersten Nabenvorsprungsteil 5, der als erster Nabenstern ausgebildet ist und vier Sternarme 6, 7, 8 und 9 aufweist. Dieser Nabenvorsprungsteil 5 ist in dem einen axialen Endbereich der Nabe 2 vorgesehen. In dem anderen axialen Endbereich der Nabe 2 ist ein zweiter Nabenvorsprungsteil 10 angeordnet, der als zweiter Nabenstern ausgebildet ist und ebenfalls vier Sternarme 11 bis 14 hat. Der erste Nabenvorsprungsteil 5 und der zweite Nabenvorsprungsteil 10 sind fest miteinander verbunden. Diese feste Verbindung kann auch in der Weise ausgeführt sein, daß die beiden Nabenvorsprungsteile 5 und 10 und der Verbindungsteil 15 miteinander einstückig ausgebildet sind.

Die Sternarme 6 bis 9 sind, ebenso wie die Sternarme 11 bis 14, jeweils in gleichen Winkelabständen voneinander um den inneren Teil der Nabe 2 herum angeordnet, d.h. je in Winkelabständen von 90°. Die Sternarme 11 bis 14 sind um 45° gegenüber den Sternarmen 6 bis 9 versetzt, so daß alle 45° in Umfangsrichtung des Meßrads 1 abwechselnd einer der Sternarme 6 bis 9 und einer der Sternarme 11 bis 14 aufeinanderfolgen. Dadurch sind die nachstehend beschriebenen Axialverbindungen und Radial-/Tangentialverbindungen so weit wie möglich in Umfangsrichtung voneinander beabstandet und somit optimal von außen her zugänglich.

Das Meßrad wird mit der Nabe 2 wie das Original-Fahrzeugrad an der Fahrzeugnabe verschraubt.

Zum Messen von Kräften und/oder Momenten, die am rotierenden Meßrad 1 wirksam sind, ist zwischen der Nabe 2 und der Felge 3 eine Verbindungsanordnung vorgesehen, die eine Radial-/Tangentialverbindungsanordnung und eine Axialverbindungsanordnung umfaßt, welche in der folgenden Art und Weise aufgebaut sind:

Die Radial-/Tangentialverbindungsanordnung besteht in der vorliegenden Ausführungsform aus vier Radial-/Tangentialverbindungen RT1, RT2, RT3 und RT4, von denen je eine einerseits an einem der Sternarme 11 bis 14 und andererseits an der Felge 3 befestigt ist. Die Radial-/Tangentialverbindungsanordnung RT1 bis RT4 hat die besondere Eigenschaft, daß sie die Nabe 2 in den Radial- und Tangentialrichtungen des Meßrads 1 steif, aber in den beiden Richtungen verschieden steif, mit der Felge 3 verbindet, dagegen in der Axialrichtung eine biegeweiche Verbindung zwischen Nabe 2 und Felge 3 bildet.

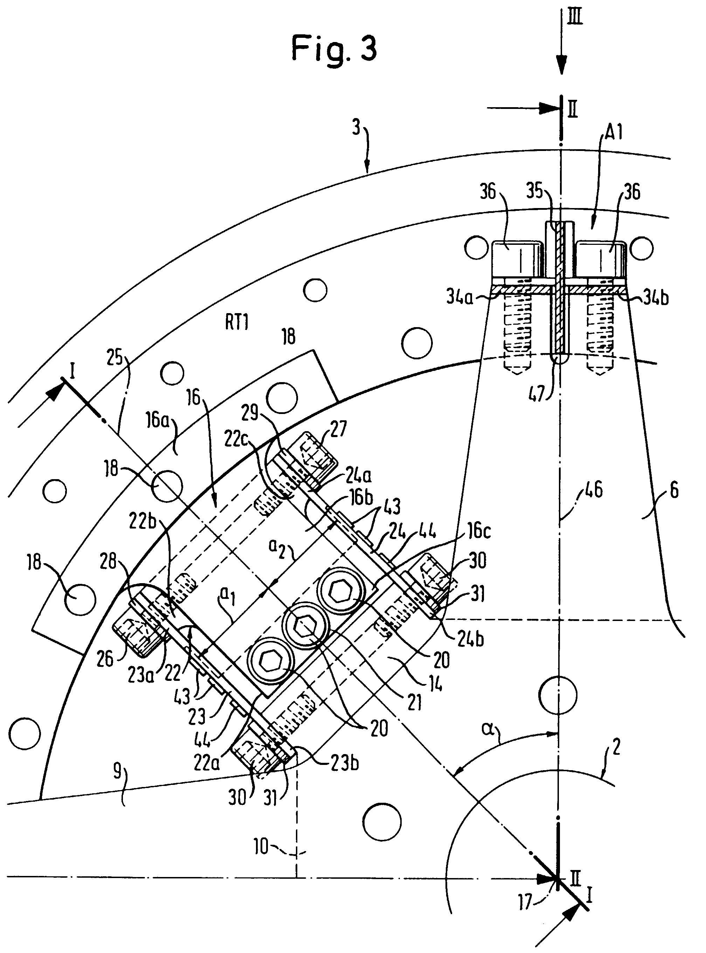

Die Axialverbindungsanordnung besteht in der vorliegenden Ausführungsform aus vier Axialverbindungen A1, A2, A3 und A4. Diese Axialverbindungen erstrecken sich in der konzentrisch ausgerichteten Position der Nabe 2 parallel zur Radachse 17 (Figur 3) oder y (die in Figur 2 angegebenen Achsen stimmen mit denjenigen der Figur 1 überein), die auch, wie bereits erwähnt, als Querachse bezeichnet wird. Die Axialverbindungen A1 bis A4 greifen an ihren einen Enden jeweils an einem Ende eines der Sternenarme 6 bis 9 und an ihrem anderen Ende an der benachbarten Stirnfläche der Felge 3 an. Die vorliegend wesentliche Eigenschaft dieser aus den Axialverbindungen A1 bis A4 bestehenden Axialverbindungsanordnung besteht darin, daß sie die Nabe 2 des Meßrads 1 in den Radaxialrichtungen, also in der Richtung der Querachse y, sowie um die Hochachse z und die Längsachse x des Meßrads 1 steif, dagegen in den übrigen Richtungen biegeweich mit der Felge 3 verbindet.

Wenn auch als Radial-/Tangentialverbindungen RT1 bis RT4 und als Axialverbindungen A1 bis A4 alle Arten von Verbindungen verwendbar sind, welche die vorstehende Steifigkeits-Weichheits-Bedingungen erfüllen, werden, wie nachstehend in Verbindung mit der Ausführungsform nach den Figuren 3 bis 6 näher erläutert ist, als Radial-/Tangentialverbindungen und Axialverbindungen Lenkerplatten- bzw. -blechverbindungen der weiter unten angegebenen und beschriebenen Art bevorzugt, da sie baulich und meßtechnisch besonders vorteilhaft sind.

Die Ausführungsform des Meßrads 1 gemäß den Figuren 3 bis 6 hat den in Figur 2 mehr schematisch dargestellten Aufbau, indem die Radial-/Tangentialverbindungen RT1 bis RT4 und die Axialverbindungen AI bis A4 als Lenkerplattenverbindungen ausgeführt sind, wobei die verwendeten Lenkerplatten vorzugsweise Lenkerbleche sind.

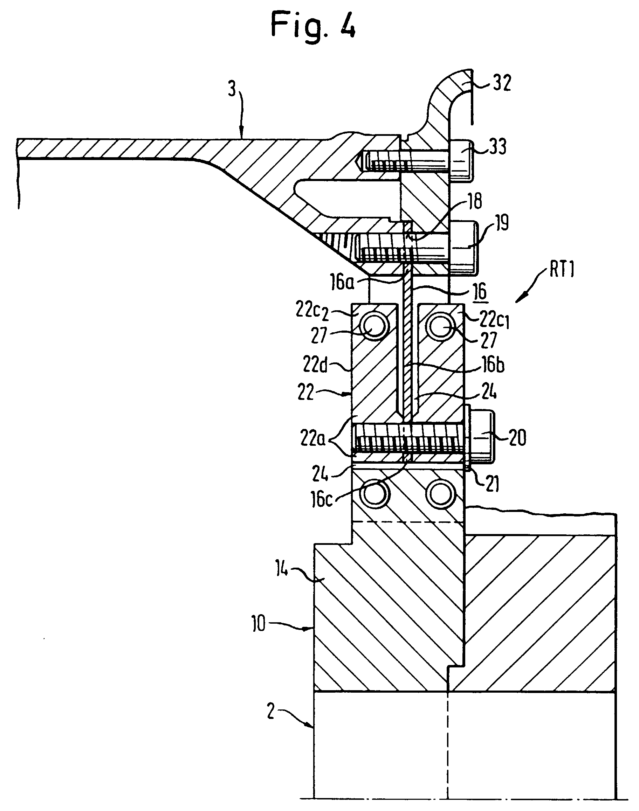

Es seien zunächst die - untereinander gleichartigen - Radial-/Tangentialverbindungen RT1 bis RT4 anhand der in den Figuren 3 und 4 dargestellten Radial-/Tangentialverbindung RT1 näher beschrieben und erläutert:

Im einzelnen umfaßt jede Radial-/Tangentialverbindung, wie die Radial-/Tangentialverbindung RT1, eine erste Lenkerplatte 16, deren Plattenebene in einer senkrecht zur Radachse 17 verlaufenden Radialebene (die in Figur 3 die Zeichnungsebene ist) liegt.

Diese erste Lenkerplatte 16 ist vorliegend etwa T-förmig ausgebildet, wobei der bogenförmig verlaufende Quersteg 16a der T-Form mit Durchgangslöchern 18 zum Befestigen des radial auswärtigen Endes der Lenkerplatte 16 an der Felge 3 mittels Schrauben 19 (siehe Figur 4) versehen ist. Zur Befestigung ist ein Felgenring 32 an der Stirnfläche der Felge 3 mittels Schrauben 33 angebracht, so daß der Quersteg 16a zwischen der Stirnfläche der Felge 3 und dem Felgenring 32 eingeklemmt wird (siehe Figur 4). Der senkrechte Steg 16b der T-Form, der im wesentlichen rechteckig ist, erstreckt sich radial nach der Radachse 17 zu, und zwar bis zu einer Befestigungsstelle, an welcher das radial einwärtige Ende 16c mittels Schrauben 20 und Unterlegscheiben 21 an einem Verbindungsstück 22 befestigt ist, und zwar an einem ersten Querteil 22a dieses Verbindungsstücks 22, der in Figur 3 parallel und in Figur 4 senkrecht zur Zeichnungsebene verläuft.

Dieses Verbindungsstück 22, das ein starres Formteil ist, dient dazu, das radial einwärtige Ende 16c der Lenkerplatte 16 starr mit zwei weiteren Lenkerplatten 23 und 24 zu verbinden, deren Plattenebenen parallel zueinander und beidseitig von der ersten Lenkerplatte 16 sowie senkrecht zur Plattenebene der ersten Lenkerplatte 16 und parallel zu einer gemeinsamen Radiallinie 25 verlaufen, und zwar in einem vorbestimmten Abstand $a_1$ bzw. $a_2$ von der Radiallinie 25. Diese Radiallinie 25 ist vorzugsweise die durch die radiale Mitte der ersten Lenkerplatte 16 hindurchverlaufende Radiallinie, und die Abstände $a_1$ und $a_2$ sind bevorzugt einander gleich, wie in Figur 3 dargestellt.

Um das radial einwärtige Ende 16c der ersten Lenkerplatte mit den radial auswärtigen Enden 23a und 24a der zweiten Lenkerplatten 23 und 24 zu verbinden, weist das Verbindungsstück 22 zwei weitere Querstege 22b und 22c auf, die vorliegend in je zwei Querstege unterteilt sind, wie Figur 4 hinsichtlich des Querstegs 22c zeigt, der in die Querstege $22c_1$ und $22c_2$ unterteilt ist. Die Querstege 22b und 22c, an denen die Enden 23a bzw. 24a der Lenkerplatte 23 bzw. 24 mittels Schrauben 26 bzw. 27 und Unterlegscheiben 28 bzw. 29 befestigt sind, verlaufen senkrecht zum Quersteg 22a und sind durch ein Zwischenstück 22d starr miteinander verbunden.

Die radial einwärtigen Enden 23b, 24b der weiteren Lenkerplatten 23, 24 (die Lenkerplatte 24 ist in Figur 4 weitgehend von dem Verbindungsstück 22 verdeckt) sind mittels Schrauben 30 und Unterlegscheiben 31 an dem entsprechenden Sternarm des Nabensterns oder Nabenvorsprungsteils 10 befestigt.

Zur Befestigung der Lenkerplatten 16, 23 und 24 an der Felge 3 bzw. Nabe 2 ist das entsprechende Ende 16a, 23b und 24b der jeweiligen Lenkerplatte vorzugsweise als ein mit derselben einstückiges Anschlußteil ausgebildet.

Die Axialverbindungen A1 bis A4 sind untereinander gleichartig aufgebaut und befestigt, so daß hier, um Wiederholungen zu vermeiden, im wesentlichen nur eine dieser Axialverbindungen, nämlich die Axialverbindung A1 und deren Befestigung an dem Sternarm 6 des als erster Nabenstern ausgeführten Nabenvorsprungsteils 5 einerseits und an der Felge 3 andererseits beschrieben wird. Außerdem sei darauf hingewiesen, daß nachstehend nur noch von Lenkerplattenverbindungen gesprochen wird, wobei die Lenkerplatten derselben sowohl durch Lenkerbleche als auch durch nichtmetallische Lenkerplatten verwirklicht sein können, so daß die Lenkerplatten beispielsweise aus Stahlblech, Graphitverbundmaterial, Kunststoff oder Kunststoffverbundmaterial etc. hergestellt sein können.

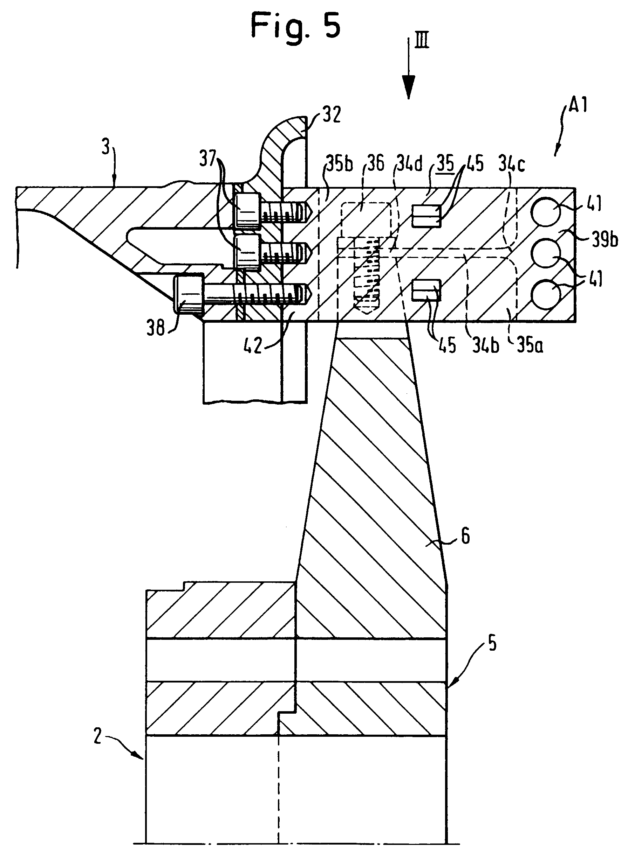

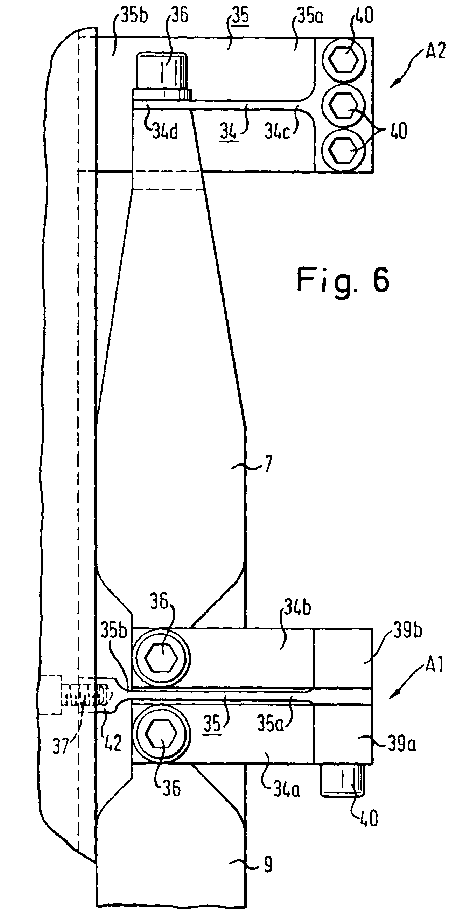

Im einzelnen umfaßt die Axialverbindung Al eine erste ebene Lenkerplatte 34 (siehe auch Figur 6, oben) und eine zweite ebene Lenkerplatte 35, wobei die Lenkerplatte 34, wie besonders deutlich an Figur 6, unten ersichtlich ist, in zwei parallele Lenkerplatten 34a und 34b aufgeteilt ist, die beidseitig von der Lenkerplatte 35 angeordnet sind. Die Plattenebenen dieser beiden Lenkerplatten 34 und 35 verlaufen senkrecht zueinander, und zwar erstreckt sich die Plattenebene der Lenkerplatte 35 in einer die Achse 17 (Figur 3) enthaltenden Axialebene, die eine Radiallinie 46 (Figur 3) enthält, während sich die Lenkerplatte 34 senkrecht zur Plattenebene der Lenkerplatte 35 und parallel zur Achse 17 des Meßrads 1 erstreckt. Das eine Ende 34c der ersten Lenkerplatte 34 ist mit dem einen Ende 35a der zweiten Lenkerplatte 35 fest verbunden, während das andere Ende 34d der ersten Lenkerplatte 34 mittels Schrauben 36 mit dem freien Ende des zugeordneten Sternarms 6 (Figur 5) bzw. 7 (Figur 6) fest verbunden ist. Das andere Ende 35b der zweiten Lenkerplatte 35 ist mittels Schrauben 37 und 38 fest mit der Felge 3 verbunden, und zwar mit dem Felgenring 32 mittels der Schrauben 37, der seinerseits mittels der Schrauben 38 und/oder 19, 33 (Figur 4) an der eigentlichen Felge 3 befestigt ist.

In der vorliegenden Ausführungsform sind die Lenkerplatten 34a, 34b zusammen mit einem an dem Ende 34c vorgesehenen Verbindungsstück 39a, 39b, in welchen Schrauben 40 eingeschraubt sind, die durch Schraubendurchgangslöcher 41 (Figur 5) der Lenkerplatten 34a, 34b hindurchgehen, einstückig ausgebildet, so daß infolgedessen die Lenkerplatten 34a, 34b zusammen mit dem zugehörigen Verbindungsstück 39a, 39b je ein T-förmiges Teil bilden, da sich das plattenförmige, wenngleich wesentlich dicker als die Lenkerplatten 34a, 34b ausgebildete, Verbindungsstück 39a bzw. 39b in seiner Plattenebene senkrecht zu der Plattenebene der jeweiligen Lenkerplatte 34a, 34b und parallel zur Plattenebene der Lenkerplatte 35 erstreckt. Die Schrauben 40 sind in Gewindelöcher in dem Verbindungsstück 39b eingeschraubt. Die Lenkerplatte 35 ist in entsprechender Weise zusammen mit ihrem am Ende 35b anschließenden Anschlußteil 42 einstückig ausgebildet.

In der vorliegenden Ausführungsform beträgt der Winkel a (Figur 3) zwischen den Radialmittellinien 25 und 46 aufeinanderfolgender Nabensternarme jeweils 45°.

Wie man in Zusammenschau aus den Figuren 3 bis 6 ersieht, wird ein äußerst kompakter und gedrängter Aufbau der Lenkerplattenverbindungen RT1 bis RT4 und Al bis A4 dadurch erzielt, daß Lenkerplatten 16 und 23, 24 sowie die Lenkerplatten 35 und 34a, 34b von ihrer Verbindungsstelle aus axial in der gleichen Richtung verlaufen, so daß sie infolgedessen gewissermaßen "ineinander verschachtelt" sind. Hierbei verläuft die Lenkerplatte 21 teilweise durch einen Radialschlitz 47, der im freien Ende des Sternarms 6 ausgebildet ist (siehe Figur 3).

Es sei hier darauf hingewiesen, daß die beiden Hälften 34a, 34b der Lenkerplatte 34, die beiden Hälften 39a, 39b des Verbindungsstücks 39, die Lenkerplatte 35 und das Anschlußteil 42 als integrale Baueinheit, insbesondere insgesamt einstückiges Teil, ausgebildet sein können.

Zur eigentlichen Messung der Kräfte und Momente sind Meßaufnehmer, die vorliegend als Dehnungsmeßstreifen ausgebildet sind, auf den Lenkerplatten 23, 24 der Radial-/Tangentialverbindungen und auf der Lenkerplatte 34a, 34b und/oder 35 vorgesehen.

Im einzelnen sind die Meßaufnehmer bzw. Dehnungsmeßstreifen in der vorliegenden bevorzugten Ausführungsform des Meßrads wie folgt angeordnet und auf den Lenkerplatten angebracht:

(1) In den Radial-/Tangentialverbindungen RT1 bis RT4 sind auf den beiden Lenkerplatten 23, 24 mehrere Dehnungsmeßstreifen 43 (Figur 3) derart angeordnet appliziert und zu Halb- oder Vollbrücken verschaltet, daß nur die Zuganteile gemessen und die Biegeanteile herauskompensiert werden. Dazu sind die Dehnungsmeßstreifen 43 in der biegefreien Zone oder der Zone minimaler Biegung der Lenkerplatten 23, 24 angeordnet. Wie Figur 3 zeigt, sind die Dehnungsmeßstreifen 43 etwa in der Längsmitte der Lenkerplatten 23, 24 positioniert.

(2) In den Radial-/Tangentialverbindungen RT1 bis RT4 sind auf den beiden Lenkerplatten 23, 24 außerdem mehrere weitere Dehnungsmeßstreifen 44 derart angeordnet appliziert und zu Halb- oder Vollbrücken verschaltet, daß nur die Biegeanteile gemessen und die Zuganteile herauskompensiert werden. Hierzu sind die Dehnungsmeßstreifen 44 in der Zone der höchsten Biegebeanspruchung der Lenkerplatten 23, 24 angeordnet. Wie Figur 3 zeigt, ist das etwa in der Nähe der Schrauben 30.

(3) In den Axialverbindungen Al bis A4 sind auf der Lenkerplatte 35 und/oder auf den Lenkerplatten 34a, 34b mehrere Dehnungsmeßstreifen 45 derart positioniert appliziert und zu Halb- oder Vollbrücken verschaltet, daß nur die Zuganteile gemessen und die Biegeanteile herauskompensiert werden. Hierzu sind die Dehnungsmeßstreifen 45 in der biegefreien Zone oder der Zone minimaler Biegung der Lenkerplatte(n) 34a, 34b und/oder 35 angeordnet, d.h. etwa in der Längsmitte dieser Lenkerplatte(n).

Im einzelnen werden aufgrund dieser Ausbildung des erfindungsgemäßen Meßrads folgende Kräfte und Momente gemessen:

(a) In den Radialrichtungen werden mittels der Radial-/Tangentialverbindungen RT1, RT2, RT3 und RT4 mit den daran vorgesehenen Meßwertaufnehmern 43 die radialen Kräfte $F_{R1-1}$, $F_{R1-2}$, $F_{R2-1}$, $F_{R2-2}$, $F_{R3-1}$, $F_{R3-2}$, $F_{R4-1}$, $F_{R4-2}$ gemessen.

(b) In den Tangentialrichtungen werden mittels der Radial-/Tangentialverbindungen RT1, RT2, RT3 und RT4 mit den daran vorgesehenen Meßwertaufnehmern 44 die durch die Tangentialkräfte bewirkten Momente: $M_{T1-1}$, $M_{T1-2}$, $M_{T2-1}$, $M_{T2-2}$, $M_{T3-1}$, $M_{T3-2}$, $M_{T4-1}$ und $M_{T4-2}$ gemessen.

(c) In Axialrichtung werden durch die Axialverbindungen A1, A2, A3 und A4 über die daran vorgesehenen Meßwertaufnehmer 45 die parallel zur y-Achse ausgerichteten Kräfte $F_{A1}$, $F_{A2}$, $F_{A3}$ und $F_{A4}$ gemessen.

Außerdem wird mittels eines Sinus- und Cosinusgebers der Drehwinkel $\omega$ des Meßrads bezogen auf das feststehende Fahrzeugkoordinatensystem gemessen.

Hierbei sind $F_{R1-1}$ und $F_{R1-2}$ die mittels der Dehnungsmeßstreifen 43 auf den beiden Lenkerplatten 23 und 24 der Radial-/Tangentialverbindung RT1 gemessenen radialen Kräfte. $F_{R2-1}$ und $F_{R2-2}$ sind die mittels der entsprechenden Elemente der Radial-/Tangentialverbindung RT2 gemessenen radialen Kräfte, etc. Entsprechendes gilt für die obigen Momente und die axialen Kräfte.

Infolgedessen ergeben sich aufgrund der in Figur 2 dargeund in den Ausführungsformen nach den Figuren 3, 4, 5 und 6 in näheren Einzelheiten verwirklichten Anordnung und Ausbildung der vier Radial-/Tangentialverbindungen RT1 bis RT4 und der vier Axialverbindungen A1 bis A4 die in Figur 1 und 2 dargestellten Kräfte und Momente in genauer und vorteilhafter Weise wie folgt:

(1) Vertikalkraft

$$F_Z = [(F_{R1-1} - F_{R1-2}) - (F_{R3-1} + F_{R3-2})] \sin \omega +$$

$$[(F_{R2-1} + F_{R2-2}) - (F_{R4-1} + F_{R4-2})] \cos \omega$$

(2) Seitenkraft

$$F_Y = F_{A1} + F_{A2} + F_{A3} + F_{A4}$$

(3) Längskraft

$$F_X = [(F_{r1\text{-}1} + F_{R1\text{-}2}) - (F_{R3\text{-}1} + F_{R3\text{-}2})]\cos\omega +$$

$$[(R_{R2\text{-}1} + F_{R2\text{-}2}) - (F_{R4\text{-}1} + F_{R4\text{-}2})]\sin\omega$$

(4) Lenkmoment

$$M_Z = K_Z \cdot (F_{A3} - F_{A1})\sin\omega + (F_{A4} - F_{A2})\cos\omega$$

(5) Antriebs/Bremsmoment

$$M_Y = K_Y (M_{T1\text{-}1} + M_{T1\text{-}2} + M_{T2\text{-}1} + M_{T2\text{-}2} + M_{T3\text{-}1} + M_{T3\text{-}2} + M_{T4\text{-}1} + M_{T4\text{-}2})$$

(6) Sturzmoment

$$M_X = K_X (F_{A3} - F_{A1})\cos\omega + (F_{A4} - F_{A2})\cos\omega$$

Hierin ist mit ω der Drehwinkel bezeichnet, dessen Sinus und Cosinus durch den am Meßrad 1 vorgesehenen, jedoch nicht dargestellten Sinus-Cosinus-Geber erhalten wird, wobei ω der Raddrehwinkel ist, wie er in Figur 2 eingezeichnet ist.

Ein wesentlicher weiterer Vorteil des erfindungsgemäßen Meßrads besteht darin, daß es ohne jede Modifikation der Radaufhängung und Bremsanlage auskommt. Außerdem bildet die Meßanordnung eine Einheit und ist mit verschiedenen Felgenbreiten und -durchmessern kombinierbar. Hierzu können die Abmessungen, insbesondere die Breite, des Felgenrings verändert werden.

Auch die Antriebs- und Bremsmomente lassen sich mit dem erfindungsgemäßen Meßrad ausgezeichnet messen. Durch die Trennung der Kraftflußpfade wird ein Einfluß der großen Reifenverformungen unter den verschiedenen Belastungen auf das Meßergebnis ausgeschlossen, und damit werden keine umfangreichen Kalibrierungen und Vorrechnungen erforderlich.

Kurz zusammengefaßt wird mit der Erfindung ein Meßrad mit einer Nabe und einer Felge sowie mit wenigstens einer Verbindungsanordnung zwischen Nabe und Felge und mit einem oder mehreren Meßelementen in oder an der Verbindungsanordnung zum Messen von Kräften und/oder Momenten, die am rotierenden Meßrad wirksam sind, zur Verfügung gestellt. Die Verbindungsanordnung zwischen Nabe und Felge umfaßt eine Radial-/Tangentialverbindungseinrichtung und eine Axialverbindungseinrichtung.

Die Radial-/Tangentialverbindungseinrichtung ist so ausgebildet, daß sie die Nabe in den Radial- und Tangentialrichtungen des Meßrads biegesteif, dagegen in der Axialrichtung biegeweich mit der Felge verbindet, während die Axialverbindungseinrichtung so ausgebildet ist, daß sie die Nabe in den Radaxialrichtungen sowie um die Hochachse und Längsachse des Meßrads steif, dagegen in den übrigen Richtungen weich mit der Felge verbindet.

Wenigstens ein Meßelement ist in oder an mindestens einer der Verbindungsanordnungen zum Messen derjenigen Kraft oder desjenigen Moments vorgesehen, die bzw. das in einer solchen Richtung zwischen der Nabe und der Felge übertragen wird, in welcher letztere durch die jeweilige Verbindungsanordnung steif miteinander verbunden sind.

**Patentansprüche**

1. Meßrad mit einer Nabe (2) und einer Felge (3), sowie mit wenigstens einer Verbindungsanordnung (A1 bis A4, RT1 bis RT4) zwischen Nabe (2) und Felge (3), und mit einem oder mehreren Meßelementen (22, 43, 44; 24, 43, 44; 35, 45) in oder an der Verbindungsanordnung (A1 bis A4, RT1 bis RT4) zum Messen von Kräften und/oder Momenten, die am rotierenden Meßrad (1) wirksam sind, wobei die Verbindungsanordnung (A1 bis A4, RT1 bis RT4) zwischen Nabe (2) und Felge (3) folgendes umfaßt:

    (a) eine die Nabe (2) in den Radaxialrichtungen sowie um die Hochachse (z) und Längsachse (x) des Meßrads (1) steif, dagegen in den Radial- und Umfangsrichtungen weich mit der Felge (3) verbindende Axialverbindungsanordnung (A1 bis A4); und

    (b) eine die Nabe (2) in den Radial- und Tangentialrichtungen des Meßrads (1) steif, dagegen in der Axialrichtung weich mit der Felge (3) verbindende Radial-/Tangentialverbindungsanordnung (RT1 bis RT4);

wobei wenigstens ein Meßelement (23, 43, 44; 24, 43, 44; 35, 45) in oder an wenigstens einer der Verbindungsanordnungen (A1 bis A4, RT1 bis RT4) zum Messen derjenigen Kraft oder desjenigen Moments vorgesehen ist, die bzw. das in einer solchen Richtung zwischen der Nabe (2) und der Felge (3) übertragen wird, in welcher letztere durch die jeweilige Verbindungsanordnung (A1 bis A4, RT1 bis RT4) steif miteinander verbunden sind;
wobei die Radial-/Tangentialverbindungsanordnung (RT1 bis RT4)

(1) aus einzelnen kombinierten Radial-/Tangentialverbindungen (RT1, RT2, RT3, RT4) besteht, von denen jede die Nabe (2) in der Radial- und Tangentialrichtung steif, dagegen in der Axialrichtung weich mit der Felge (3) verbindet, und

(2) in ihren Steifigkeiten in den beiden Meßrichtungen und in der Anordnung und Verschaltung der Meßelemente (23, 24, 43, 44) so ausgeführt ist, daß die in bezug auf das Meßrad (1) rotierenden Kraftrichtungen (Fx, Fz) von dem rotationssymmetrischen Moment (My) getrennt werden.

2. Meßrad nach Anspruch 1, dadurch **gekennzeichnet**, daß in oder an jeder der beiden Verbindungsanordnungen (A1 bis A4, RT1 bis RT4) ein oder mehrere Meßelemente (23, 43, 44; 24, 43, 44; 35, 45) vorgesehen sind.

3. Meßrad nach Anspruch 1 oder 2, dadurch **gekennzeichnet**, daß die Axialverbindungsanordnung (A1 bis A4) aus wenigstens drei Axialverbindungen (A1, A2, A3, A4) besteht, die vorzugsweise gleichmäßig über den Umfang der Nabe (2) bzw. Felge (3) verteilt angeordnet sind.

4. Meßrad nach Anspruch 3, dadurch **gekennzeichnet**, daß die Axialverbindungsanordnung (A1 bis A4) aus vier Axialverbindungen (A1, A2, A3, A4) besteht, die gleichmäßig über den Umfang der Nabe (2) bzw. Felge (3) verteilt angeordnet sind.

5. Meßrad nach einem der Ansprüche 1 bis 4, dadurch **gekennzeichnet**, daß die Radial-/Tangentialverbindungsanordnung (RT1 bis RT4) aus wenigstens drei Radial-/Tangentialverbindungen (RT1, RT2, RT3, RT4) besteht, die vorzugsweise gleichmäßig über den Umfang der Nabe (2) bzw. Felge (3) verteilt angeordnet sind.

6. Meßrad nach Anspruch 5, dadurch **gekennzeichnet**, daß die Radial-/Tangentialverbindungsanordnung (RT1 bis RT4) aus vier Radial-/Tangentialverbindungen (RT1, RT2, RT3, RT4) besteht, die gleichmäßig über dem Umfang der Nabe (2) bzw. Felge (3) verteilt angeordnet sind.

7. Meßrad nach einem der Ansprüche 3 bis 6, dadurch **gekennzeichnet**, daß jede Radial-/Tangentialverbindung (RT1 bis RT4) zusammen mit einer Axialverbindung (A1 bis A4) in einer beiden gemeinsamen, die Radachse (17) enthaltenen Radialebene positioniert ist oder daß die Radial-/Tangentialverbindungen (RT1 bis RT4) mit Bezug auf die Axialverbindungen gegeneinander um einen Winkel (a) versetzt angeordnet sind, insbesondere um 45°.

8. Meßrad nach einem der Ansprüche 1 bis 7, dadurch **gekennzeichnet**, daß die Axialverbindungsanordnung (A1 bis A4) an einem ersten Nabenvorsprungsteil (5) in dem einen axialen Endbereich eines Nabenaußenteils der Nabe (2) angreift, während die Radial-/Tangentialverbindungsanordnung (RT1 bis RT4) an einem zweiten Nabenvorsprungsteil (10) in dem entgegengesetzten axialen Endbereich des Nabenaußenteils der Nabe (2) angreift.

9. Meßrad nach Anspruch 8, dadurch **gekennzeichnet**, daß das erste und/oder zweite Nabenvorsprungsteil (5, 10) als erster und/oder zweiter Nabenstern ausgebildet ist, an dessen Sternarmen (6 bis 9, 11 bis 14) die jeweilige Axialverbindungsanordnung (A1 bis A4) bzw. Radial-/Tangentialverbindungsanordnung (RT1 bis RT4) angreift.

10. Meßrad nach einem der Ansprüche 1 bis 9, dadurch **gekennzeichnet**, daß die Axialverbindungsanordnung (Al bis A4) und/oder die Radial-/Tangentialverbindungsanordnung (RT1 bis RT4) eine Lenkerplattenverbindungsanordnung, insbesondere eine Lenkerblechverbindungsanordnung, umfaßt oder ist.

11. Meßrad nach Anspruch 10 in Verbindung mit einem der Ansprüche 3 bis 9, dadurch **gekennzeichnet**, daß die Axialverbindung (Al bis A4) und/oder die Radial-/Tangentialverbindung (RT1 bis RT4) eine Lenkerplattenverbindung umfaßt oder ist.

12. Meßrad nach Anspruch 11, dadurch **gekennzeichnet**, daß die als Axialverbindung (A1 bis A4) vorgesehene Lenkerplattenverbindung eine erste und zweite Lenkerplatte (34, 35) umfaßt, deren Plattenebenen senkrecht zueinander verlaufen, wobei die Plattenebene der einen Lenkerplatte (34) parallel zur Radachse (17) verläuft, während die Plattenebene der anderen Lenkerplatte (35) in einer die Radachse (17) enthaltenden und längs einer Radiallinie (46) verlaufenden Ebene ausgerichtet ist, und wobei das eine Ende (34c) der einen Lenkerplatte (34) fest mit dem einen Ende (35a) der anderen Lenkerplatte (35) verbunden ist, während das andere Ende (34d) der einen Lenkerplatte (34) fest mit der Nabe (2) und das andere Ende (35b) der anderen Lenkerplatte (35) fest mit der Felge (3) verbunden ist.

13. Meßrad nach Anspruch 11 oder 12, dadurch **gekennzeichnet**, daß die in Reihe angeordneten Lenkerplatten (16 bzw. 23, 24, 34, 35) einer Lenkerplattenverbindung so miteinander verbunden sind, daß sie über einen wesentlichen Bereich, vorzugsweise mehr als die Hälfte, ihrer Erstreckung zwischen ihren beiden Enden (16a, 16c; 23a, 24a; 23b, 24b; 34c, 34d; 35a, 35b) nebeneinander verlaufen.

14. Meßrad nach Anspruch 13, dadurch **gekennzeichnet**, daß eine (34) der in Reihe angeordneten Lenkerplatten (34, 35) ganz oder teilweise in zwei parallele Streifen bzw. Lenkerplatten (34a, 34b) aufgeteilt ist.

15. Meßrad nach Anspruch 13 oder 14, dadurch **gekennzeichnet**, daß die in Reihe angeordneten Lenkerplatten (16 bzw. 23, 24; 34, 35) von der Verbindungsstelle ihrer einen Enden (16c bzw. 23b, 24b, 34c, 35a) aus in der gleichen Axial- bzw. Radialrichtung verlaufen.

16. Meßrad nach Anspruch 13 oder 14, dadurch **gekennzeichnet**, daß die einen Enden (16c bzw. 23b, 24b; 34c, 35a) der in Reihe angeordneten Lenkerplatten (16 bzw. 23, 24; 34, 35) durch wenigstens ein Verbindungsstück (22; 39a, 39b) miteinander verbunden sind, das sich von einer Befestigungsstelle an dem einen Ende (16c, 34c) der einen Lenkerplatte (16, 34) in Richtung nach dem anderen Ende (16a, 35b) der einen Lenkerplatte (16, 35) zu einer Befestigungsstelle an dem einen (23a, 24a; 35a) Ende der anderen Lenkerplatte(n) (23, 24, 35) erstreckt.

17. Meßrad nach Anspruch 11 oder einem der Ansprüche 13 bis 16, dadurch **gekennzeichnet**, daß die als Radial-/Tangentialverbindung (RT1 bis RT4) vorgesehene Lenkerplattenverbindung eine erste Lenkerplatte (16) und zwei weitere Lenkerplatten (23, 24) umfaßt, wobei die Plattenebenen der beiden weiteren Lenkerplatten (23, 24) parallel zueinander und senkrecht zur Plattenebene der ersten Lenkerplatte (16) verlaufen, wobei das eine Ende (16c) der ersten Lenkerplatte (16) fest mit den einen Enden (23a, 24a) der weiteren Lenkerplatten (23, 24) verbunden ist, während das andere Ende (16a) der ersten Lenkerplatte (16) fest mit der Felge (3) verbunden ist und die anderen Enden 23b, 24b) der weiteren Lenkerplatten (23, 24) fest mit der Nabe (2) verbunden sind.

18. Meßrad nach Anspruch 17, dadurch **gekennzeichnet**, daß die Plattenebene der ersten Lenkerplatte (16) in einer senkrecht zur Axialrichtung verlaufenden Radialebene angeordnet ist und daß die Plattenebenen der beiden weiteren Lenkerplatten (23, 24) beidseitig von der ersten Lenkerplatte (16) und parallel zu einer gemeinsamen Radiallinie (25) angeordnet sind.

19. Meßrad nach Anspruch 18, dadurch **gekennzeichnet**, daß die beiden weiteren Lenkerplatten (23, 24) parallel zu einer durch die radiale Mitte der ersten Lenkerplatte (16) hindurchgehenden Radiallinie (25) sowie in gleichen Abständen ($a_1$, $a_2$) von dieser Radiallinie (25) angeordnet sind.

20. Meßrad nach Anspruch 17, 18 oder 19, dadurch **gekennzeichnet**, daß das eine Ende (16c) der ersten Lenkerplatte (16) durch wenigstens ein Verbindungsstück (22) mit den einen Enden (23a, 24a) der beiden weiteren Lenkerplatten (23, 24) verbunden ist, wobei sich das Verbindungsstück (22) von einer Befestigungsstelle an dem einen Ende (16c) der ersten Lenkerplatte (16) in Richtung nach dem anderen Ende (16a) der ersten Lenkerplatte (16) zu Befestigungsstellen mit den einen Enden (23a, 24a) der beiden weiteren Lenkerplatten (23, 24) erstreckt.

21. Meßrad nach einem der Ansprüche 10 bis 20, dadurch **gekennzeichnet**, daß wenigstens eine der Lenkerplatten (16, 23, 24, 34, 35) einstückig mit einem Verbindungsstück (22, 39a, 39b) zum Befestigen der Lenkerplatten aneinander ausgebildet ist.

22. Meßrad nach einem der Ansprüche 10 bis 21, dadurch **gekennzeichnet**, daß wenigstens eine der Lenkerplatten (16, 23, 24, 34, 35) einstückig mit einem Anschlußteil (42) zum Befestigen derselben an der Nabe (2) oder Felge (3) ausgebildet ist.

23. Meßrad nach einem der Ansprüche 1 bis 22, dadurch **gekennzeichnet**, daß ein oder mehrere Meßelemente von wenigstens einer Axialverbindung (A1 bis A4) und/oder wenigstens einer Radial-/Tangentialverbindung (RT1 bis RT4) und einem oder mehreren in oder an derselben applizierten Meßaufnehmer(n), bevorzugt Dehnungsmeßstreifen (43, 44, 45), gebildet sind.

24. Meßrad nach Anspruch 23, dadurch **gekennzeichnet**, daß ein oder mehrere Meßelemente (35, 45) in Axialrichtung von einer oder beiden Lenkerplatten (34, 35) jeweils einer Axialverbindung (A1 bis A4) und einem oder mehreren auf der einen Lenkerplatte (35) oder auf beiden Lenkerplatten (34, 35) applizierten Meßaufnehmer(n), bevorzugt Dehnungsmeßstreifen (45), gebildet sind.

25. Meßrad nach Anspruch 24, dadurch **gekennzeichnet**, daß ein oder mehrere Meßelemente in Radial-/Tangentialrichtung von den beiden weiteren Lenkerplatten (23, 24) jeweils einer Radial-/Tangentialverbindung (RT1 bis RT4) und einem oder mehreren auf den beiden weiteren Lenkerplatten (23, 24) applizierten Meßaufnehmer(n), bevorzugt Dehnungsmeßstreifen (43, 44), gebildet sind.

26. Meßrad nach Anspruch 25, dadurch **gekennzeichnet**, daß in wenigstens einer Radial-/Tangentialverbindung (RT1 bis RT4) auf den beiden weiteren Lenkerplatten (23, 24) mehrere Meßaufnehmer, bevorzugt Dehnungsmeßstreifen (43), derart vorgesehen, bevorzugt appliziert und zu Halb- oder Vollbrücken verschaltet sind, daß nur die Zuganteile gemessen und die Biegeanteile herauskompensiert werden.

27. Meßrad nach Anspruch 25 oder 26, dadurch **gekennzeichnet**, daß in wenigstens einer Radial-/Tangentialverbindung (RT1 bis RT4) auf den beiden weiteren Lenkerplatten (23, 24) mehrere Meßaufnehmer, bevorzugt Dehnungsmeßstreifen (44), derart vorgesehen, bevorzugt appliziert und zu Halb- oder Vollbrücken verschaltet sind, daß nur die Biegeanteile gemessen und die Zuganteile herauskompensiert werden.

28. Meßrad nach Anspruch 24, dadurch **gekennzeichnet**, daß in wenigstens einer Axialverbindung (A1 bis A4) auf einer oder beiden Lenkerplatten (34, 35) mehrere Meßaufnehmer, bevorzugt Dehnungsmeßstreifen (45), derart angeordnet, bevorzugt appliziert und zu Halb- oder Vollbrücken verschaltet sind, daß nur die Zuganteile gemessen und die Biegeanteile herauskompensiert werden.

29. Meßrad nach einem der Ansprüche 3 bis 28, **gekennzeichnet** durch einen an der Stirnfläche der Felge (3) angebrachten Felgenring (32) zur Befestigung der felgenseitigen Enden (16a, 35b) der Axialverbindungen (A1 bis A4) und/oder der Radial-/Tangentialverbindungen (RT1 bis RT4).

30. Meßrad nach einem der vorhergehenden Ansprüche, **gekennzeichnet** durch einen Sinus- und/oder Cosinusgeber.

31. Meßrad nach einem der vorhergehenden Ansprüche, dadurch **gekennzeichnet**, daß die Lenkerplatten (16, 23, 24, 34, 35) Lenkerbleche sind.

32. Meßrad nach einem der vorhergehenden Ansprüche, dadurch **gekennzeichnet**, daß die Steifigkeit der Radial-/Tangentialverbindungsanordnung (RT1 bis RT4) in Tangentialrichtung geringer als in Radialrichtung ist.

## Claims

1. Measuring wheel having a hub (2) and a rim (3), as well as having at least one connection arrangement (A1 to A4, RT1 to RT4) between hub (2) and rim (3), and having one or more measuring elements (22, 43, 44; 24, 43, 44; 35, 45) in or on the connection arrangement (A1 to A4, RT1 to RT4) for measuring forces and/or torques which are effective at the rotating measuring wheel (1), wherein the connection arrangement (A1 to A4, RT1 to RT4) between hub (2) and rim (3) comprises the following:

(a) an axial connection arrangement (A1 to A4) connecting the hub (2) to the rim (3) rigidly in the wheel axial directions as well as about the vertical axis (z) and longitudinal axis (x) of the measuring wheel (1) but non-rigidly in the radial and peripheral directions; and

(b) a radial/tangential connection arrangement (RT1 to RT4) connecting the hub (2) to the rim (3) rigidly in the radial and tangential directions of the measuring wheel (1) but non-rigidly in the axial direction;

wherein at least one measuring element (23, 43, 44; 24, 43, 44; 35, 45) is provided in or on at least one of the connection arrangements (A1 to A4, RT1 to RT4) for measuring the force or torque which is transmitted between hub (2) and rim (3) in a direction, in which the latter are connected rigidly to one another by the respective connection arrangement (A1 to A4, RT1 to RT4);
wherein the radial/tangential connection arrangement (RT1 to RT4)

(1) comprises individual, combined radial/tangential connections (RT1, RT2, RT3, RT4), each of which connects the hub (2) to the rim (3) rigidly in the radial and tangential direction but non-rigidly in the axial direction, and

(2) in terms of its stiffnesses in the two measuring directions and in terms of the arrangement and wiring of the measuring elements (23, 24, 43, 44) is so designed that the - in relation to the measuring wheel (1) - rotating force directions (Fx, Fz) are separated from the rotationally symmetric torque (My).

2. Measuring wheel according to claim 1, characterized in that one or more measuring elements (23, 43, 44; 24, 43, 44; 35, 45) are provided in or on each of the two connection arrangements (A1 to A4, RT1 to RT4).

3. Measuring wheel according to claim 1 or 2, characterized in that the axial connection arrangement (A1 to A4) comprises at least three axial connections (A1, A2, A3, A4) which are preferably arranged distributed uniformly over the periphery of the hub (2) and/or rim (3).

4. Measuring wheel according to claim 3, characterized in that the axial connection arrangement (A1 to A4) comprises four axial connections (A1, A2, A3, A4) which are arranged distributed uniformly over the periphery of the hub (2) and/or rim (3).

5. Measuring wheel according to one of claims 1 to 4, characterized in that the radial/tangential connection arrangement (RT1 to RT4) comprises at least three radial/tangential connections (RT1, RT2, RT3, RT4) which are arranged preferably distributed uniformly over the periphery of the hub (2) and/or rim (3).

6. Measuring wheel according to claim 5, characterized in that the radial/tangential connection arrangement (RT1 to RT4) comprises four radial/tangential connections (RT1, RT2, RT3, RT4) which are arranged uniformly distributed over the periphery of the hub (2) and/or rim (3).

7. Measuring wheel according to one of claims 3 to 6, characterized in that each radial/tangential connection (RT1 to RT4) is positioned together with an axial connection (A1 to A4) in a radial plane, which is common to both and contains the wheel axis (17), or that the radial/ tangential connections (RT1 to RT4) are arranged in relation to the axial connections offset relative to one another by an angle ($\alpha$), in particular by 45°.

8. Measuring wheel according to one of claims 1 to 7, characterized in that the axial connection arrangement (A1 to A4) is attached to a first hub projection part (5) in the one axial end region of a hub outer part of the hub (2), while the radial/tangential connection arrangement (RT1 to RT4) is attached to a second hub projection part (10) in the opposite axial end region of the hub outer part of the hub (2).

9. Measuring wheel according to claim 8, characterized in that the first and/or second hub projection part (5, 10) takes the form of a first and/or second hub star, to the star arms (6 to 9, 11 to 14) of which the respective axial connection arrangement (A1 to A4) and/or radial/tangential connection arrangement (RT1 to RT4) is attached.

10. Measuring wheel according to one of claims 1 to 9, characterized in that the axial connection arrangement (A1 to A4) and/or the radial/tangential connection arrangement (RT1 to RT4) comprises or is a link plate connection arrangement, in particular a metal link plate connection arrangement.

11. Measuring wheel according to claim 10 in conjunction with one of claims 3 to 9, characterized in that the axial connection (A1 to A4) and/or the radial/tangential connection (RT1 to RT4) comprises or is a link plate connection.

12. Measuring wheel according to claim 11, characterized in that the link plate connection provided as an axial connection (A1 to A4) comprises a first and second link plate (34, 35), the plate planes of which extend at right angles to one another, the plate plane of the one link plate (34) extending parallel to the wheel axis (17), while the plate plane of the other link plate (35) is aligned in a plane containing the wheel axis (17) and extending along a radial line (46), and the one end (34c) of the one link plate (34) being firmly connected to the one end (35a) of the other link plate (35), while the other end (34d) of the one link plate (34) is firmly connected to the hub (2) and the other end (35b) of the other link plate (35) is firmly connected to the rim (3).

13. Measuring wheel according to claim 11 or 12, characterized in that the serially arranged link plates (16 and/or 23, 24, 34, 35) of a link plate arrangement are connected to one another in such a way that they extend alongside one another over a substantial region, preferably more than half, of their extension between their two ends (16a, 16c; 23a, 24a; 23b, 24b; 34c, 34d; 35a, 35b).

14. Measuring wheel according to claim 13, characterized in that one (34) of the serially arranged link plates (34, 35) is divided in whole or in part into two parallel strips or link plates (34a, 34b).

15. Measuring wheel according to claim 13 or 14, characterized in that the serially arranged link plates (16 and/or 23, 24; 34, 35) extend from the connection point of their one ends (16c and/or 23b, 24b, 34c, 35a) in the same axial and/or radial direction.

16. Measuring wheel according to claim 13 or 14, characterized in that the one ends (16c and/or 23b, 24b; 34c, 35a) of the serially arranged link plates (16 and/or 23, 24; 34, 35) are connected to one another by at least one connection piece (22; 39a, 39b) which extends from a fastening point at the one end (16c, 34c) of the one link plate (16, 34) in the direction of the other end (16a, 35b) of the one link plate (16, 35) to a fastening point at the one end (23a, 24a; 35a) of the other link plate(s) (23, 24, 35).

17. Measuring wheel according to claim 11 or one of claims 13 to 16, characterized in that the link plate connection provided as a radial/tangential connection (RT1 to RT4) comprises a first link plate (16) and two further link plates (23, 24), the plate planes of the two further link plates (23, 24) running parallel to one another and at right angles to the plate plane of the first link plate (16), the one end (16c) of the first link plate (16) being firmly connected to the one ends (23a, 24a) of the further link plates (23, 24), while the other end (16a) of the first link plate (16) is firmly connected to the rim (3) and the other ends (23b, 24b) of the further link plates (23, 24) are firmly connected to the hub (2).

18. Measuring wheel according to claim 17, characterized in that the plate plane of the first link plate (16) is disposed in a radial plane extending at right angles to the axial direction and that the plate planes of the two further link plates (23, 24) are disposed on either side of the first link plate (16) and parallel to a common radial line (25).

19. Measuring wheel according to claim 18, characterized in that the two further link plates (23, 24) are disposed parallel to a radial line (25), which passes through the radial centre of the first link plate (16), and at equal distances $(a_1, a_2)$ from said radial line (25).

20. Measuring wheel according to claim 17, 18 or 19, characterized in that the one end (16c) of the first link plate (16) is connected by at least one connection piece (22) to the one ends (23a, 24a) of the two further link plates (23, 24), the connection piece (22) extending from a fastening point at the one end (16c) of the first link plate (16) in the direction of the other end (16a) of the first link plate (16) to fastening points at the one ends (23a, 24a) of the two further link plates (23, 24).

21. Measuring wheel according to one of claims 10 to 20, characterized in that at least one of the link plates (16, 23, 24, 34, 35) is integrally constructed with a connection piece (22, 39a, 39b) for fastening the link plates to one another.

22. Measuring wheel according to one of claims 10 to 21, characterized in that at least one of the link plates (16, 23, 24, 34, 35) is integrally constructed with a connecting part (42) for fastening said link plate to the hub (2) or rim (3).

23. Measuring wheel according to one of claims 1 to 22, characterized in that one or more measuring elements are formed by at least one axial connection (A1 to A4) and/or at least one radial/tangential connection (RT1 to RT4) and one or more measuring pick-up(s), preferably strain gauges (43, 44, 45), which are attached in or to said connection(s).

24. Measuring wheel according to claim 23, characterized in that one or more measuring elements (35, 45) are formed in an axial direction by one or both link plates (34, 35) of in each case one axial connection (A1 to A4) and by one or more measuring pick-up(s), preferably strain gauges (45), which are attached to the one link plate (35) or to both link plates (34, 35).

25. Measuring wheel according to claim 24, characterized in that one or more measuring elements are formed in a radial/tangential direction by the two further link plates (23, 24) of in each case one radial/tangential connection (RT1 to RT4) and by one or more measuring pick-up(s), preferably strain gauges (43, 44), which are attached to the two further link plates (23, 24).

26. Measuring wheel according to claim 25, characterized in that in at least one radial/tangential connection (RT1 to RT4) a plurality of measuring pick-ups, preferably strain gauges (43), are provided, preferably attached and wired up to form half-bridges or full bridges, on the two further link plates (23, 24) in such a way that only the tensile components are measured and the flexural components are compensated out.

27. Measuring wheel according to claim 25 or 26, characterized in that in at least one radial/tangential connection (RT1 to RT4) a plurality of measuring pick-ups, preferably strain gauges (44), are provided, preferably attached and wired up to form half-bridges or full bridges, on the two further link plates (23, 24) in such a way that only the flexural components are measured and the tensile components are compensated out.

28. Measuring wheel according to claim 24, characterized in that in at least one axial connection (A1 to A4) a plurality of measuring pick-ups, preferably strain gauges (45), are disposed, preferably attached and wired up to form half-bridges or full bridges, on one or both link plates (34, 35) in such a way that only the tensile components are measured and the flexural components are compensated out.

29. Measuring wheel according to one of claims 3 to 28, characterized by a rim ring (32) fitted to the end face of the rim (3) for fastening the rim-side ends (16a, 35b) of the axial connections (A1 to A4) and/or of the radial/ tangential connections (RT1 to RT4).

30. Measuring wheel according to one of the preceding claims, characterized by a sine and/or cosine encoder.

31. Measuring wheel according to one of the preceding claims, characterized in that the link plates (16, 23, 24, 34, 35) are metal link plates.

32. Measuring wheel according to one of the preceding claims, characterized in that the stiffness of the radial/ tangential connection arrangement (RT1 to RT4) is lower in tangential direction than in radial direction.

**Revendications**

1. Roue de mesure comportant un moyeu (2) et une jante (3), ainsi qu'au moins un dispositif de liaison (A1 à A4, RT1 à RT4) entre le moyeu (2) et la jante (3), et un ou plusieurs éléments de mesure (22, 43, 44 ; 24, 43, 44 ; 35, 45) disposés dans ou sur le dispositif de liaison (A1 à A4, RT1 à RT4) pour mesurer des forces et/ou des moments, qui agissent au niveau de la roue de mesure (1) en rotation, le dispositif (A1 à A4, RT1 à RT4) situé entre le moyeu (2) et la jante (3) comprenant ce qui suit :

(a) un dispositif de liaison axiale (A1 à A4), qui relie le moyeu (2) à la jante (3) d'une manière rigide dans les directions axiales de la roue ainsi qu'autour de l'axe vertical (z) et de l'axe longitudinal (x) de la roue de mesure (1), et au contraire de façon souple dans les directions radiale et circonférentielle ; et
(b) un dispositif de liaison radiale/tangentielle (RT1 à RT4) qui relie le moyeu (2) à la jante (3) de manière rigide dans une direction radiale et tangentielle de la roue de mesure (1), et au contraire d'une manière souple dans la direction axiale,

dans laquelle au moins un élément de mesure (22, 43, 44 ; 24, 43, 44 ; 35, 45) est prévu dans ou sur au moins l'un des dispositifs de liaison (A1 à A4, RT1 à RT4) pour mesurer la force ou le moment, qui est transmis(e) entre le moyeu (2) et la jante (3) dans une direction dans laquelle le moyeu et la jante sont reliés entre eux d'une manière rigide par le dispositif de liaison respectif (A1 à A4, RT1 à RT4) ;
dans laquelle le dispositif de liaison radiale/tangentielle (RT1 à RT4)

(1) est constitué par des liaisons radiales/tangentielles individuelles combinées (RT1, RT2, RT3, RT4), dont chacune relie le moyeu (2) à la jante (3) de façon rigide dans les directions radiale et tangentielle, et au contraire d'une manière souple dans la direction axiale,

(2) est agencé, en ce qui concerne ses rigidités dans les deux directions de mesure et en ce qui concerne la disposition et le câblage des éléments de mesure (23, 24, 43, 44), de telle sorte que les directions de force (Fx, Fz), qui tournent par rapport à la roue de mesure (1), sont séparées du moment (My) à symétrie de révolution.

2. Roue de mesure selon la revendication 1, caractérisée en ce qu'un ou plusieurs éléments de mesure (23, 43, 44 ; 24, 43, 44 ; 35, 45) sont prévus dans ou sur chacun des deux dispositifs de liaison (A1 à A4, RT1 à RT4).

3. Roue de mesure selon la revendication 1 ou 2, caractérisée en ce que le dispositif de liaison axiale (A1 à A4) est constitué par au moins trois liaisons axiales (A1, A2, A3, A4), qui sont disposées de préférence en étant réparties uniformément sur la périphérie du moyeu (2) et de la jante (3).

4. Roue de mesure selon la revendication 3, caractérisée en ce que le dispositif de liaison axiale (A1 à A4) est constitué de quatre liaisons axiales (A1, A2, A3, A4), qui sont disposées en étant réparties uniformément sur la périphérie du moyeu (2) et de la jante (3).

5. Roue de mesure selon l'une des revendications 1 à 4, caractérisée en ce que le dispositif de liaison radiale/tangentielle (RT1 à RT4) est constitué d'au moins trois liaisons radiales/tangentielles (RT1, RT2, RT3, RT4), qui sont disposées en étant de préférence réparties uniformément sur la périphérie du moyeu (2) et de la jante (3).

6. Roue de mesure selon la revendication 5, caractérisée en ce que le dispositif de liaison radiale/tangentielle (RT1 à RT4) est constitué de quatre liaisons radiales/tangentielles (RT1, RT2, RT3, RT4) qui sont disposées en étant réparties uniformément sur la périphérie du moyeu (2) et de la jante (3).

7. Roue de mesure selon l'une des revendications 3 à 6, caractérisée en ce que chaque liaison radiale/tangentielle (RT1 à RT4) est positionnée conjointement avec une liaison axiale (A1 à A4) dans l'un des deux plans radiaux communs, qui contiennent l'axe (17) de la roue, ou que les liaisons radiales/tangentielles (RT1 à RT4) sont disposées, en étant décalées réciproquement d'un angle ($\alpha$), notamment de 45°, par rapport aux liaisons axiales.

8. Roue de mesure selon l'une des revendications 1 à 7, caractérisée en ce que le dispositif de liaison axiale (A1 à A4) attaque une première partie saillante (5) du moyeu dans une zone d'extrémité axiale d'une partie extérieure du moyeu (2), tandis que le dispositif de liaison radiale/tangentielle (RT1 à RT4) attaque une seconde partie saillante (10) du moyeu dans la zone d'extrémité axiale opposée de la partie extérieure du moyeu (2).

9. Roue de mesure selon la revendication 8, caractérisée en ce que la première et/ou la seconde partie saillante (5, 10) du moyeu est agencée sous la forme d'une première et/ou d'une seconde étoile de moyeu, sur les branches (6 à 9, 11 à 14) de laquelle s'accroche le dispositif respectif de liaison axiale (A1 à A4) ou le dispositif respectif de liaison radiale/tangentielle (RT1 à RT4).

10. Roue de mesure selon l'une des revendications 1 à 9, caractérisée en ce que le dispositif de liaison axiale (A1 à A4) et/ou le dispositif de liaison radiale/ tangentielle (RT1 à RT4) comprend ou est formé par un dispositif de liaison à plaques oscillantes, notamment un dispositif de liaison à tôles oscillantes.

11. Roue de mesure selon la revendication 10 en combinaison avec l'une des revendications 3 à 9, caractérisée en ce que la liaison axiale (A1 à A4) et/ou la liaison radiale/tangentielle (RT1 à RT4) comprend ou est constituée par une liaison à plaques oscillantes.

12. Roue de mesure selon la revendication 11, caractérisée en ce que la liaison à plaques oscillantes, qui est prévue en tant que liaison axiale (A1 à A4), comprend des première et seconde plaques oscillantes (34, 35) dont les plans sont perpendiculaires entre eux, le plan d'une plaque oscillante (34) étant parallèle à l'axe de roue (17), tandis que le plan de l'autre plaque oscillante (35) est orienté dans un plan qui contient l'axe de roue (17) et s'étend le long d'une ligne radiale (46), et dans lequel une extrémité (34c) d'une première plaque oscillante (34) est reliée de façon fixe à une extrémité (35a) de l'autre plaque oscillante (35), tandis que l'autre extrémité (34d) de la première plaque oscillante (34) est reliée de façon fixe au moyeu (2) et que l'autre extrémité (35b) de l'autre plaque oscillante (35) est reliée de façon fixe à la jante (3).

13. Roue de mesure selon la revendication 11 ou 12, caractérisée en ce que les plaques oscillantes (16 à 23, 24, 34, 35), disposées en série, d'une liaison à plaques oscillantes sont reliées entre elles de telle sorte qu'elles s'étendent côte-à-côte sur une partie importante, de préférence plus de la moitié de leur étendue entre les deux extrémités (16a, 16c, 23a, 24a ; 23b, 24b ; 34c, 34d ; 35a, 35b).

14. Roue de mesure selon la revendication 13, caractérisée en ce que l'une (34) des plaques oscillantes (34, 35) disposées en série est divisée en totalité ou en partie en deux bandes ou plaques oscillantes parallèles (34a, 34b).

15. Roue de mesure selon la revendication 13 ou 14, caractérisée en ce que les plaques oscillantes (16 ou 23, 24 ; 34, 35) disposées en série s'étendent, à partir du point de liaison d'une de leurs extrémités (16c à 23b, 24b, 34c, 35a), dans la même direction axiale ou radiale.

16. Roue de mesure selon la revendication 13 ou 14, caractérisée en ce que les premières extrémités (16c ou 23b, 24b ; 34c, 35a) des plaques oscillantes (16 ou 23, 24 ; 34, 35) disposées en série sont reliées entre elles par au moins un élément de liaison (22 ; 39a, 39b), qui s'étend depuis un point de fixation sur une extrémité (16c, 34c) d'une première plaque oscillante (16, 34) en direction de l'autre extrémité (16a, 35b) de la première plaque oscillante (16, 35) jusqu'à un point de fixation situé sur une extrémité (23a, 24a ; 35a) de la ou des autres plaques oscillantes (23, 24, 35).

17. Roue de mesure selon la revendication 11 ou l'une des revendications 13 à 16, caractérisée en ce que la liaison à plaques oscillantes prévue en tant que liaison radiale/tangentielle (RT1 à RT4) comprend une première plaque oscillante (16), et deux autres plaques oscillantes (23, 24), les plans des deux autres plaques oscillantes (24, 24) étant parallèles entre eux et perpendiculaires au plan de la première plaque oscillante (13), et une extrémité (16c) de la première plaque oscillante (16) étant reliée de façon fixe à des premières extrémités (23a, 24a) des autres plaques oscillantes (23, 24), tandis que l'autre extrémité (16a) de la première plaque oscillante (16) est reliée de façon fixe à la jante (3) et que les autres extrémités (23b, 24b) des autres plaques oscillantes (23, 24) sont réalisées de façon fixe au moyeu (2).

18. Roue de mesure selon la revendication 17, caractérisée en ce que le plan de la première plaque oscillante (16) est disposé dans un plan radial qui s'étend perpendiculairement à la direction axiale, et que les plans des deux autres plaques oscillantes (23, 24) sont disposées des deux côtés de la première plaque oscillante (16) et sont parallèles à une ligne radiale commune (25).

19. Roue de mesure selon la revendication 18, caractérisée en ce que les deux autres plaques oscillantes (23, 24) sont disposées parallèlement à une ligne radiale (25), qui passe par le centre, dans le sens radial, de la première plaque oscillante (16), et sont disposées à des distances identiques ($a_1$, $a_2$) de celle ligne radiale (25).

20. Roue de mesure selon la revendication 17, 18 ou 19, caractérisée en ce qu'une première extrémité (16c) de la première plaque oscillante (16) est reliée par au moins un élément de liaison (22) à des premières extrémités (23a, 24a) des deux autres plaques oscillantes (23, 24), l'élément de liaison (22) s'étendant depuis un point de fixation situé sur la première extrémité (16c) de la première plaque oscillante (16) en direction de l'autre extrémité (16a) de la première plaque oscillante (16) jusqu'à des points de fixation avec les premières extrémités (23a, 24a) des deux autres plaques oscillantes (23, 24).

21. Roue de mesure selon l'une des revendications 10 à 20, caractérisée en ce qu'au moins l'une des plaques oscillantes (16, 23, 24, 34, 35) est agencée d'un seul tenant avec un élément de liaison (22, 39a, 39b) servant à fixer les plaques oscillantes entre elles.

22. Roue de mesure selon l'une des revendications 10 à 21, caractérisée en ce qu'au moins l'une des plaques oscillantes (16, 23, 24, 34, 35) est réalisée d'un seul tenant avec un élément de raccordement (42) pour la fixation de ce dernier au moyeu (2) ou à la jante (3).

23. Roue de mesure selon l'une des revendications 1 à 22, caractérisée en ce qu'un ou plusieurs éléments de mesure sont formées par au moins une liaison axiale (A1 à A4) et/ou par au moins une liaison radiale/tangentielle (RT1 à RT4) et par un ou plusieurs capteurs de mesure, qui sont positionnés dans ou sur cette liaison, de préférence des jauges extensométriques (43, 44, 45).

24. Roue de mesure selon la revendication 23, caractérisée en ce qu'un ou plusieurs éléments de mesure (35, 45) sont formés, dans la direction axiale, par une plaque oscillante ou par les deux plaques oscillantes (34, 35) respectivement d'une liaison axiale (A1 à A4) et par un ou plusieurs capteurs de mesure, qui sont appliqués sur la plaque oscillante (35) ou sur les deux plaques oscillantes (34, 35) de préférence des jauges extensométriques (45).

25. Roue de mesure selon la revendication 24, caractérisée en ce qu'un ou plusieurs éléments de mesure sont formés, dans la direction radiale/tangentielle, par les deux autres plaques oscillantes (23, 24) respectivement d'une liaison radiale/tangentielle (RT1 à RT4), et par un ou plusieurs capteurs de mesure appliqués sur les deux autres plaques oscillantes (23, 24), de préférence des jauges extensométriques (43, 44).

26. Roue de mesure selon la revendication 25, caractérisée en ce que dans au moins une liaison radiale/tangentielle (RT1 à RT4), plusieurs capteurs de mesure, de préférence des jauges extensométriques (43), sont disposés sur les deux autres plaques oscillantes (23, 24), en étant de préférence appliqués et connectés pour former des demi-ponts ou des ponts entiers, de telle sorte que seules les composantes de traction sont mesurées et les composantes de flexion sont supprimées par compensation.

27. Roue de mesure selon la revendication 25 ou 26, caractérisée en ce que dans au moins une liaison radiale/tangentielle (RT1 à RT4), plusieurs capteurs de mesure, de préférence des jauges extensométriques (44), sont prévus sur les deux autres plaques oscillantes (23, 24) en étant de préférence appliqués et connectés pour former des demi-ponts ou des ponts entiers, de telle sorte que seuls les composantes de flexion sont mesurées et que les composantes de flexion sont supprimées par compensation.

28. Roue de mesure selon la revendication 24, caractérisée en ce que dans au moins une liaison axiale (1 à 4), plusieurs capteurs de mesure, de préférence des jauges extensométriques (45), sont disposés sur une plaque oscillante ou sur les deux plaques oscillantes (34, 35), de préférence en étant appliqués et connectés pour former des demi-ponts ou des ponts entiers, de telle sorte que seules les composantes de traction sont mesurées et que les composantes de flexion sont supprimées par compensation.

29. Roue de mesure selon l'une des revendications 3 à 28, caractérisée par un anneau de jante (32), qui est disposé sur la surface frontale de la jante (3) et sert à fixer les extrémités (16a, 35b), situées du côté de la jante, des liaisons axiales (1 à 4) et/ou des liaisons radiales/tangentielles (RT1 à RT4).

30. Roue de mesure selon l'une des revendications précédentes, caractérisée par un générateur de sinus et/ou un générateur de cosinus.

31. Roue de mesure selon l'une des revendications précédentes, caractérisée en ce que les plaques oscillantes (16, 23, 24, 34, 35) sont des tôles oscillantes.

32. Roue de mesure selon l'une des revendications précédentes, caractérisée en ce que la rigidité du dispositif de liaison radiale/tangentielle (RT1 à RT4) est plus faible dans la direction tangentielle que dans la direction radiale.

# Fig. 1

$F_z$ = Vertikalkraft $F_v$

$F_y$ = Seitenkraft $F_s$

$F_x$ = Längskraft $F_L$

$M_z$ = Lenkmoment $M_L$

$M_y$ = Antriebs-/Bremsmoment $M_{AB}$

$M_x$ = Sturzmoment $M_S$

# Fig. 2

# Fig. 3

# Fig. 4

# Fig. 5

Fig. 6